# EUROPEAN PATENT APPLICATION

(11) **EP 4 221 382 A1**
(43) Date of publication of application: **02.08.2023**
(21) Application number: 20958376.4
(22) Date of filing: 23.10.2020
(51) Int. Cl.: H04W 68/02

(54) **METHOD AND APPARATUS FOR PAGING**

(71) Applicant: Huawei Technologies Co., Ltd., Shenzhen, Guangdong 518129 (CN)
(72) Inventor: XIE, Xi, Shenzhen, Guangdong 518129 (CN); CHANG, Junren, Shenzhen, Guangdong 518129 (CN); KUANG, Yiru, Shenzhen, Guangdong 518129 (CN)
(74) Representative: Maiwald GmbH
(86) International application number: PCT/CN2020/123444
(87) International publication number: WO 2022/082794

(57) **Abstract**

This application provides a paging method and apparatus. The method includes: receiving first indication information, where the first indication message is used to determine a type of first paging; determining the type of the first paging based on the first indication information, where the type of the first paging includes paging non-repetition or paging repetition; and determining, based on the type of the first paging, to receive or not to receive the first paging. According to the paging method in embodiments of this application, a terminal device can determine the type of the first paging based on the first indication information, and determine, based on the type of the first paging, to receive or not to receive the first paging. In this way, additional power consumption caused by repeated reception of unnecessary paging by an unrelated terminal device is reduced, and a paging false alarm is reduced.

## Description

### TECHNICAL FIELD

Embodiments of this application relate to the communication field, and more specifically, to a paging method and apparatus.

### BACKGROUND

In a network, user equipment (User Equipment, UE) may be notified, through paging, to receive a paging message. Alternatively, in a network, a short message may be sent, through paging, to UE to indicate a system information update or an earthquake and tsunami warning/a commercial mobile alert.

According to a protocol, the user equipment calculates a paging occasion (Paging Occasion, PO) location of the user equipment based on UE identification information and a paging-related parameter, and listens to a PO within each paging cycle, to determine whether paging is performed in the network.

However, there may be a case in which a plurality of UE listen to a same PO. When paging is initiated on a PO in the network, all the UE on the PO listen to, receive, and decode the paging information. UE that is not actually paged in the network generates additional power consumption when repeatedly listening to, receiving, and decoding an unnecessary paging message without distinction each time. Therefore, how to reduce a paging false alarm is a problem to be resolved urgently at present.

### SUMMARY

This application provides a paging method and apparatus, to prevent as much as possible an unrelated terminal device from repeatedly receiving same paging, so as to reduce unnecessary power consumption and reduce a paging false alarm.

According to a first aspect, a paging method is provided, including: receiving first indication information, where the first indication message is used to determine a type of first paging, and the type of the first paging includes paging non-repetition or paging repetition; determining the type of the first paging based on the first indication information; and determining, based on the type of the first paging, to receive or not to receive the first paging.

According to the solution provided in this application, a terminal device receives the first indication information sent by a network device, and the terminal device can determine the type of the first paging. Then, the terminal device can determine, based on a case of receiving paging previously, to receive or not to receive the first paging. The terminal device receives the first paging only when it is ensured that the terminal device has not received the paging, and therefore, does not need to repeatedly receive same paging without distinction each time. This reduces additional power consumption caused by unnecessary paging reception, and reduces a paging false alarm.

With reference to the first aspect, in some implementations of the first aspect, the first indication information is carried in a reference signal.

With reference to the first aspect, in some possible implementations of the first aspect, the indication information may be carried in downlink control information (Downlink Control Information, D CI), a physical layer signal/sequence (sequence), a media access control (Media Access Control, MAC) control element (Control Element, CE), a radio resource control (Radio Resource Control, RRC) message, or the like. Specific carrying signaling or a specific carrying message may be a wake-up signal (Wake-Up Signal, WUS), paging DCI, a paging message, or the like.

According to the foregoing indication information sending method, the first indication information can be sent to the terminal device by using existing signaling, for example, the DCI, the MAC CE, or the RRC.

With reference to the first aspect, in some implementations of the first aspect, the paging repetition satisfies:
if message content of the first paging is the same as message content of second paging, the first paging is repeated paging, and the second paging is paging sent before the first paging; or
if a terminal device of the first paging belongs to a terminal device of second paging, the first paging is repeated paging, and the second paging is paging sent before the first paging.

With reference to the first aspect, in some implementations of the first aspect, the determining, based on the type of the first paging, to receive or not to receive the first paging includes:
receiving the first paging if the type of the first paging is the paging non-repetition; or
skipping receiving the first paging if the type of the first paging is the paging repetition.

With reference to the first aspect, in some implementations of the first aspect, the determining, based on the type of the first paging, to receive or not to receive the first paging further includes:
receiving the first paging if the type of the first paging is the paging repetition and no paging has been received before the first paging; or
skipping receiving the first paging if the type of the first paging is the paging repetition and paging has been received before the first paging.

With reference to the first aspect, in some implementations of the first aspect, that no paging has been received before the first paging includes:
no paging has been received within first duration before the first paging and/or in a currently camped serving cell; or
no paging the same as the first paging has been received before the first paging.

With reference to the first aspect, in some implementations of the first aspect, that the paging has been received before the first paging includes:
the paging has been received within first duration before the first paging and/or in a currently camped serving cell; or
paging the same as the first paging has been received before the first paging.

With reference to the first aspect, in some implementations of the first aspect, the determining, based on the type of the first paging, to receive or not to receive the first paging further includes:
if the first indication information of the first paging is different from first indication information received last time, determining that the type of the first paging is the paging non-repetition, and receiving the first paging; or
if the first indication information of the first paging is the same as first indication information received last time, determining that the type of the first paging is the paging repetition, and skipping receiving the first paging.

With reference to the first aspect, in some implementations of the first aspect, the method further includes:
receiving a wake-up signal WUS, where the wake-up signal WUS is used to determine to receive or not to receive the first paging; and
determining, based on the wake-up signal WUS and the first indication information, to receive or not to receive the first paging.

According to the foregoing technical solution, whether the first paging is new paging or repeated paging is distinguished, to prevent an unrelated terminal from repeatedly receiving same paging. The terminal device can determine the type of the first paging by receiving the first indication information sent by the network device. Then, the terminal device can determine, based on the case of receiving the paging previously, to receive or not to receive the first paging. The terminal device receives the first paging only when it is ensured that the terminal device has not received the paging, and does not need to repeatedly receive the same paging without distinction each time. This reduces additional power consumption caused by unnecessary paging reception, and reduces the paging false alarm.

According to a second aspect, a paging method is provided, including: A network device determines a type of first paging, and then sends first indication information to a terminal device. The first indication information is used to determine the type of the first paging, and the type of the first paging includes paging non-repetition or paging repetition.

According to the solution provided in this application, the network device sends the first indication information to the terminal device, to indicate the type of the first paging. After receiving the first indication information, the terminal device determines the type of the first paging, and then can determine, based on a case of receiving paging previously, to receive or not to receive the first paging. The terminal device receives the first paging only when it is ensured that the terminal device has not received the paging, and does not need to repeatedly receive paging without distinction each time. This reduces additional power consumption caused by unnecessary paging reception, and reduces the paging false alarm.

With reference to the second aspect, in some implementations of the second aspect, the first indication information is carried in a reference signal.

With reference to the second aspect, in some implementations of the second aspect, in some possible implementations, the indication information may be carried in downlink control information DCI, a physical layer signal/sequence (sequence), a MAC CE, a radio resource control RRC message, or the like. Specific carrying signaling or a specific carrying message may be a wake-up signal WUS, paging DCI, a paging message, or the like.

According to the foregoing indication information sending method, the first indication information can be sent to the terminal device by using existing signaling, for example, the DCI, the MAC CE, or the RRC.

With reference to the second aspect, in some implementations of the second aspect, the paging repetition satisfies:
if message content of the first paging is the same as message content of second paging, the first paging is repeated paging, and the second paging is paging sent before the first paging; or
if a terminal device of the first paging belongs to a terminal device of second paging, the first paging is repeated paging, and the second paging is paging sent before the first paging.

With reference to the second aspect, in some implementations of the second aspect, sending the first indication information includes:
sending the first indication information if the type of the first paging is the paging non-repetition, where the first indication information is used to determine that the type of the first paging is the paging non-repetition; or
sending the first indication information if the type of the first paging is the paging repetition, where the first indication information is used to determine that the type of the first paging is the paging repetition.

With reference to the second aspect, in some implementations of the second aspect, sending the first indication information further includes:
sending same first indication information if a plurality of pieces of paging are same paging, where the first indication information is used to determine the type of the first paging, and the first paging is any one of the plurality of pieces of paging.

According to the foregoing technical solution, whether the paging is new paging or repeated paging is distinguished, to prevent an unrelated terminal from repeatedly receiving same paging. The terminal device can determine the type of the first paging by receiving the first indication information sent by the network device. Then, the terminal device can determine, based on the case of receiving the paging previously, to receive or not to receive the first paging. The terminal device receives the first paging only when it is ensured that the terminal device has not received the paging, and does not need to repeatedly receive the paging without distinction each time. This reduces additional power consumption caused by unnecessary paging reception, and reduces the paging false alarm.

According to a third aspect, a communication method is provided, including: A terminal device determines first information. The first information includes identification information of one or more cells that the terminal device camps on/visits and second information, and the second information is stay probability information of the terminal device in the one or more camped/visited cells. The terminal device sends the first information.

According to the solution provided in this application, the terminal device reports information about the cell that the terminal device camps on or visits, including the cell identification information, the stay probability information in the one or more cells, specific time information, and the like. When needing to initiate paging for the terminal device, a network device can determine, based on the information that is about the camped/visited cell and that is reported by the terminal device, a cell in which the terminal device may stay or may stay with a high probability (currently), and therefore, can preferably initiate paging in one or more cells in which the terminal device may stay or may stay with a higher probability. On one hand, a paging range is optimized, the paging is more accurate, the paging within an excessively large range is avoided, and impact on an unrelated terminal device can be reduced. On another hand, a success probability of paging the terminal device is also increased, and a case in which the terminal device needs to be paged for a plurality of times within different ranges is avoided as much as possible.

With reference to the third aspect, in some implementations of the third aspect, the first information includes:
stay probability information of the terminal device in the one or more cells within a first time period; or
stay probability information of the terminal device in a first cell within a plurality of time periods.

With reference to the third aspect, in some implementations of the third aspect, sending the first information includes: sending the first information to a core network and/or a radio access network.

According to the foregoing technical solution, the terminal device reports the first information of the camped or visited cell, to assist the network device in determining or optimizing the paging range. When paging needs to be initiated for the terminal device, the cell in which the terminal device may stay or may stay with the high stay probability (currently) can be determined, and therefore, the paging can be preferably initiated in the one or more cells in which the terminal device may stay or may stay with the higher probability. On one hand, the paging range is optimized, paging is more accurate, paging within the excessively large range is avoided, and the impact on the unrelated terminal device can be reduced. On another hand, the success probability of paging the terminal device is also increased, and the case in which the terminal device needs to be paged for the plurality of times within the different ranges is avoided as much as possible.

According to a fourth aspect, a communication method is provided, including: A network device receives first information sent by a terminal device. The first information includes identification information of one or more cells that the terminal device camps on/visits and second information. The second information is stay probability information of the terminal device in the one or more camped/visited cells, and the first information is used by the network device to determine a paging range. The network device determines a paging range of the terminal device based on the first information.

According to the solution provided in this application, the network device can determine the paging range based on the first information reported by the terminal device, including the cell identification information, a corresponding stay probability of the cell, specific time information, and the like. When paging needs to be initiated for the terminal device, a cell in which the terminal device may stay or may stay with a high probability (currently) can be determined, and therefore, the paging can be preferably initiated in one or more cells in which the terminal device may stay or may stay with a higher probability. On one hand, the paging range is optimized, the paging is more accurate, paging within an excessively large range is avoided, and impact on an unrelated terminal device can be reduced. On another hand, a success probability of paging the terminal device is also increased, and a case in which the terminal device needs to be paged for a plurality of times within different ranges is avoided as much as possible.

With reference to the fourth aspect, in some implementations of the fourth aspect, the first information includes:
the identification information of the one or more camped/visited cells, and/or the stay probability information of the one or more camped/visited cells.

With reference to the fourth aspect, in some implementations of the fourth aspect, the first information includes:
stay probability information of the terminal device in the one or more cells within a first time period; or
stay probability information of the terminal device in a first cell within a plurality of time periods.

With reference to the fourth aspect, in some implementations of the fourth aspect, determining the paging range based on the first information includes:
if a core network receives the first information and the core network sends paging, the core network determines the paging range based on the first information; or
if an access network receives the first information and the access network sends paging, the access network determines the paging range based on the first information; or
if a core network receives the first information and an access network sends paging, the core network sends data of the terminal device and the first information to a last serving base station last serving gNB for the terminal device, and the last serving base station last serving gNB determines the paging range based on the first information.

According to the foregoing technical solution, the network device can determine the paging range based on the first information reported by the terminal device, including the cell identification information, the corresponding stay probability of the cell, the specific time information, and the like. When paging needs to be initiated for the terminal device, the cell in which the terminal device may stay or may stay with the high probability (currently) can be determined, and therefore, the paging can be preferably initiated in one or more cells in which the terminal device may stay or may stay with the higher probability. On one hand, the paging range is optimized, paging is more accurate, paging within the excessively large range is avoided, and the impact on the unrelated terminal device can be reduced. On another hand, the success probability of paging the terminal device is also increased, and the case in which the terminal device needs to be paged for the plurality of times within the different ranges is avoided as much as possible.

According to a fifth aspect, a paging method is provided, including: A terminal device receives a first grouping parameter sent by a network device. The first grouping parameter is used to determine a group number of a radio resource control idle RRC_IDLE terminal device and/or a group number of a radio resource control inactive RRC_INACTIVE terminal device. The terminal device determines the group number based on the first grouping parameter. The group number is used by a network device to send paging.

According to the solution provided in this application, the terminal device receives the first grouping parameter sent by the network device, and can obtain through division a group number range of idle UE and a group number range of inactive UE, or configure a group number offset for idle UE or inactive UE, so that the idle UE and the inactive UE are added to different UE groups, that is, it is ensured that the idle UE and the inactive UE are not in a same group. It should be understood that the network device does not initiate RAN paging but may initiate only CN paging for the idle UE. However, the network device may initiate the RAN paging or the CN paging for the inactive UE. The idle UE and the inactive UE are added to the different groups, to prevent, when the network initiates the RAN paging for the inactive UE, the idle UE from unnecessarily receiving the RAN paging. In addition, in practice, a probability that the network device initiates paging for the inactive UE may be greater than a probability that the network device initiates paging for the idle UE. The idle UE and the inactive UE are added to the different groups, to prevent, when the network device frequently pages the inactive UE, the idle UE from frequently performing unnecessary paging reception.

With reference to the fifth aspect, in some implementations of the fifth aspect, the first grouping parameter includes:
a group number range or a group number offset, where
the group number range includes a first group number range and/or a second group number range, the first group number range is a group number range of the RRC_IDLE terminal device, and the second group number range is a group number range of the RRC_INACTIVE terminal device; and
the group number offset includes a first group number offset and/or a second group number offset, the first group number offset is a group number offset of the RRC_IDLE terminal device, and the second group number offset is a group number offset of the RRC_INACTIVE terminal device.

With reference to the fifth aspect, in some implementations of the fifth aspect, receiving the first grouping parameter includes:
the terminal device receives the first grouping parameter from a broadcast message; or
the terminal device receives the first grouping parameter from a radio resource control RRC message.

With reference to the fifth aspect, in some implementations of the fifth aspect, determining the group number of the terminal device based on the first grouping parameter includes:
the RRC_IDLE terminal device determines the group number based on the first group number range or the first group number offset; or
the RRC_INACTIVE terminal device determines the group number based on the second group number range or the second group number offset.

According to the foregoing technical solution, terminal devices in different RRC statuses, namely, RRC_IDLE UE and RRC_INACTIVE UE, are grouped, to reduce unnecessary paging reception of an unrelated terminal device. By using the first grouping parameter sent by the network device to the terminal device, the group number ranges used by the idle UE and the inactive UE can be obtained through division, or the group number offset can be configured for the idle UE or the inactive UE, so that the idle UE and the inactive UE are added to the different UE groups, that is, it is ensured that the idle UE and the inactive UE are not in the same group. It should be understood that the network device does not initiate the RAN paging but may initiate only the CN paging for the idle UE. However, the network device may initiate the RAN paging or the CN paging for the inactive UE. The idle UE and the inactive UE are added to the different groups, to prevent, when the network initiates the RAN paging for the inactive UE, the idle UE from unnecessarily receiving the RAN paging. In addition, in practice, the probability that the network device initiates the paging for the inactive UE may be greater than the probability that the network device initiates the paging for the idle UE. The idle UE and the inactive UE are added to the different groups, to prevent, when the network device frequently pages the inactive UE, the idle UE from frequently performing unnecessary paging reception.

According to a sixth aspect, a paging method is provided, including: sending a first grouping parameter, where the first grouping parameter is used to determine a group number of a radio resource control idle RRC_IDLE terminal device and/or a group number of a radio resource control inactive RRC_INACTIVE terminal device, and the group number is used by a network device to send paging.

According to the solution provided in this application, group number ranges used by idle UE and inactive UE are obtained through division, or a group number offset is configured for idle UE or inactive UE, so that the idle UE and the inactive UE can be added to different UE groups, that is, it is ensured that the idle UE and the inactive UE are not in a same group. It should be understood that the network does not initiate RAN paging but may initiate only CN paging for the idle UE. However, the network may initiate the RAN paging or the CN paging for the inactive UE. The idle UE and the inactive UE are added to the different groups, to prevent, when the network initiates the RAN paging for the inactive UE, the idle UE from unnecessarily receiving the RAN paging. In addition, in practice, a probability that the network initiates paging for the inactive UE may be greater than a probability that the network initiates paging for the idle UE. The idle UE and the inactive UE are added to the different groups, to prevent, when the network frequently pages the inactive UE, the idle UE from frequently performing unnecessary paging reception.

With reference to the sixth aspect, in some implementations of the sixth aspect, the first grouping parameter includes:
a group number range or a group number offset, where
the group number range includes a first group number range and/or a second group number range, the first group number range is a group number range of the RRC_IDLE terminal device, and the second group number range is a group number range of the RRC_INACTIVE terminal device; and
the group number offset includes a first group number offset and/or a second group number offset, the first group number offset is a group number offset of the RRC_IDLE terminal device, and the second group number offset is a group number offset of the RRC_INACTIVE terminal device.

With reference to the sixth aspect, in some implementations of the sixth aspect, the sending a first grouping parameter includes: The network device broadcasts the first grouping parameter to a terminal device; or
the network device sends the first grouping parameter to a terminal device by using a radio resource control RRC message.

According to the foregoing technical solution, terminal devices in different RRC statuses, namely, RRC_IDLE UE and RRC_INACTIVE UE, are grouped, to reduce unnecessary paging reception of an unrelated terminal device. By using the first grouping parameter sent by the network device to the terminal device, group number ranges used by the idle UE and the inactive UE can be obtained through division, or a group number offset can be configured for the idle UE or the inactive UE, so that the idle UE and the inactive UE are added to the different UE groups, that is, it is ensured that the idle UE and the inactive UE are not in the same group. It should be understood that the network device does not initiate the RAN paging but may initiate only the CN paging for the idle UE. However, the network device may initiate the RAN paging or the CN paging for the inactive UE. The idle UE and the inactive UE are added to the different groups, to prevent, when the network initiates the RAN paging for the inactive UE, the idle UE from unnecessarily receiving the RAN paging. In addition, in practice, the probability that the network device initiates the paging for the inactive UE may be greater than the probability that the network device initiates the paging for the idle UE. The idle UE and the inactive UE are added to the different groups, to prevent, when the network device frequently pages the inactive UE, the idle UE from frequently performing unnecessary paging reception.

According to a seventh aspect, a paging method is provided, including: A terminal device sends a second grouping parameter to a core network device or an access network device. The second grouping parameter is used to determine a group number of the terminal device. The terminal device receives a fourth grouping parameter sent by the access network device. The fourth grouping parameter is used by the terminal device to determine the group number. The terminal device determines the group number of the terminal device based on the second grouping parameter and the fourth grouping parameter. The group number is used by a network device to send paging.

According to the solution provided in this application, the terminal device and the core network device negotiate, based on a feature of the terminal device, information related to grouping of the terminal devices, so that terminal devices with same or similar features can be added to a same group. The terminal devices may be grouped based on service features of the terminal devices, and terminal devices with same/similar service types or service requirements are added to a same group. It is considered that, in practice, a probability that terminal devices with similar services are paged at the same time is higher. In this grouping manner, when a service or a type of service arrives, it can be ensured as much as possible that terminal devices to be paged this time belong to a same group. This decreases a probability that an unrelated terminal device is paged. In addition, the terminal devices may be alternatively grouped based on a mobility feature. Terminal devices with same or similar mobility states or same or similar speeds are added to a same group. It is considered that, in practice, a probability that a terminal device with high mobility or a high speed changes a camped cell is high, and a probability that the network device needs to page the terminal device within a large range is correspondingly higher; and a probability that a terminal device with low mobility or a low speed stays in a small range is higher, and a probability that the network device needs to page the terminal device only within a small range is correspondingly higher. In this grouping manner, when paging the terminal device with high mobility or the high speed, the network can be prevented as much as possible from generating unnecessary paging for the terminal device with the low mobility or the low speed.

With reference to the seventh aspect, in some implementations of the seventh aspect, the second grouping parameter includes a parameter related to a service of the terminal device, for example, a service requirement level of the terminal device.

With reference to the seventh aspect, in some implementations of the seventh aspect, the second grouping parameter is determined based on a quality of service parameter of the service of the terminal device, and/or a service type of the terminal device, and/or a mobility state or a speed of the terminal device.

With reference to the seventh aspect, in some implementations of the seventh aspect, receiving the fourth grouping parameter includes:
the terminal device receives the fourth grouping parameter from a message broadcast by the access network device; or
the terminal device receives the fourth grouping parameter sent by the access network device by using a radio resource control RRC message.

With reference to the seventh aspect, in some implementations of the seventh aspect, the method further includes:
sending an updated second grouping parameter if the core network device does not receive the second grouping parameter sent by the terminal device; or
receiving an updated second grouping parameter sent by the core network device, where the second grouping parameter is used by the terminal device to determine the group number.

With reference to the seventh aspect, in some implementations of the seventh aspect, the method further includes:
receiving a second grouping parameter sent by the core network device, where the second grouping parameter is used to determine the group number of the terminal device.

According to the foregoing technical solution, the terminal devices are grouped by distinguishing features of different terminal devices, to reduce a probability that the terminal device performs unnecessary paging reception. The terminal devices may be grouped based on the service features of the terminal devices, and the terminal devices with the same/similar service types or service requirements are added to the same group. It is considered that, in practice, a probability that terminal devices with similar services are paged at the same time is higher. In this grouping manner, when a service or a type of service arrives, it can be ensured as much as possible that terminal devices to be paged this time belong to a same group. This decreases the probability that the unrelated terminal device is paged. In addition, the terminal devices may be alternatively grouped based on the mobility feature. Terminal devices with the same or similar mobility states or the same or similar speeds are added to the same group. It is considered that, in practice, the probability that the terminal device with high mobility or the high speed changes the camped cell is high, and the probability that the network device needs to page the terminal device within the large range is correspondingly higher; and the probability that the terminal device with low mobility or the low speed stays in the small range is higher, and the probability that the network device needs to page the terminal device only within the small range is correspondingly higher. In this grouping manner, when paging the terminal device with high mobility or the high speed, the network can be prevented as much as possible from generating the unnecessary paging for the terminal device with the low mobility or the low speed.

According to an eighth aspect, a paging method is provided, including: A core network device receives a second grouping parameter sent by a terminal device. The second grouping parameter is used to determine a group number of the terminal device. The core network device sends the second grouping parameter and a third grouping parameter to an access network device. The third grouping parameter is used to determine a fourth grouping parameter. The fourth grouping parameter is used to determine the group number of the terminal device, and the group number is used by a network device to send paging.

According to the solution provided in this application, the terminal device and the core network device negotiate, based on a feature of the terminal device, information related to grouping of the terminal devices, so that terminal devices with same or similar features can be added to a same group. The terminal devices may be grouped based on service features of the terminal devices, and terminal devices with same/similar service types or service requirements are added to a same group. It is considered that, in practice, a probability that terminal devices with similar services are paged at the same time is higher. In this grouping manner, when a service or a type of service arrives, it can be ensured as much as possible that terminal devices to be paged this time belong to a same group. This decreases a probability that an unrelated terminal device is paged. In addition, the terminal devices may be alternatively grouped based on a mobility feature. Terminal devices with same or similar mobility states or same or similar speeds are added to a same group. It is considered that, in practice, a probability that a terminal device with high mobility or a high speed changes a camped cell is high, and a probability that the network device needs to page the terminal device within a large range is correspondingly higher; and a probability that a terminal device with low mobility or a low speed stays in a small range is higher, and a probability that the network device needs to page the terminal device only within a small range is correspondingly higher. In this grouping manner, when paging the terminal device with high mobility or the high speed, the network can be prevented as much as possible from generating unnecessary paging for the terminal device with the low mobility or the low speed.

With reference to the eighth aspect, in some implementations of the eighth aspect, the second grouping parameter includes a parameter related to a service of the terminal device.

With reference to the eighth aspect, in some implementations of the eighth aspect, the second grouping parameter is determined based on a quality of service parameter of the service of the terminal device, and/or a service type of the terminal device, and/or a mobility state or a speed of the terminal device.

With reference to the eighth aspect, in some implementations of the eighth aspect, the method further includes:
skipping receiving the second grouping parameter sent by the terminal device; or
sending an updated second grouping parameter, where the updated second grouping parameter is determined based on the second grouping parameter sent by the terminal device, and the second grouping parameter is used to determine the group number of the terminal device.

With reference to the eighth aspect, in some implementations of the eighth aspect, the method further includes:
determining the second grouping parameter, where the second grouping parameter is used to determine the group number of the terminal device; and
sending the second grouping parameter to the terminal device.

According to the foregoing technical solution, the terminal devices are grouped by distinguishing features of different terminal devices, to reduce a probability that the terminal device performs unnecessary paging reception. The terminal devices may be grouped based on the service features of the terminal devices, and the terminal devices with the same/similar service types or service requirements are added to the same group. It is considered that, in practice, the probability that the terminal devices with the similar services are paged at the same time is higher. In this grouping manner, when a service or a type of service arrives, it can be ensured as much as possible that terminal devices to be paged this time belong to a same group. This decreases the probability that the unrelated terminal device is paged. In addition, the terminal devices may be alternatively grouped based on the mobility feature. The terminal devices with the same or similar mobility states or the same or similar speeds are added to the same group. It is considered that, in practice, the probability that the terminal device with high mobility or the high speed changes the camped cell is high, and the probability that the network device needs to page the terminal device within the large range is correspondingly higher; and the probability that the terminal device with low mobility or the low speed stays in the small range is higher, and the probability that the network device needs to page the terminal device only within the small range is correspondingly higher. In this grouping manner, when paging the terminal device with high mobility or the high speed, the network can be prevented as much as possible from generating the unnecessary paging for the terminal device with the low mobility or the low speed.

According to a ninth aspect, a paging method is provided, including: An access network device receives a second grouping parameter sent by a core network device or a terminal device. The second grouping parameter is used to determine a group number of the terminal device. The access network device receives a third grouping parameter sent by the core network device. The third grouping parameter is used to determine a fourth grouping parameter. The access network device determines the fourth grouping parameter based on the third grouping parameter. The access network device sends the fourth grouping parameter to the terminal device. The fourth grouping parameter is used to determine the group number of the terminal device. The access network device determines the group number of the terminal device based on the second grouping parameter and the fourth grouping parameter. The group number is used by a network device to send paging.

According to the solution provided in this application, the terminal device and the core network device negotiate, based on a feature of the terminal device, information related to grouping of the terminal devices, so that terminal devices with same or similar features can be added to a same group. The terminal devices may be grouped based on service features of the terminal devices, and terminal devices with same/similar service types or service requirements are added to a same group. It is considered that, in practice, a probability that terminal devices with similar services are paged at the same time is higher. In this grouping manner, when a service or a type of service arrives, it can be ensured as much as possible that terminal devices to be paged this time belong to a same group. This decreases a probability that an unrelated terminal device is paged. In addition, the terminal devices may be alternatively grouped based on a mobility feature. Terminal devices with same or similar mobility states or same or similar speeds are added to a same group. It is considered that, in practice, a probability that a terminal device with high mobility or a high speed changes a camped cell is high, and a probability that the network device needs to page the terminal device within a large range is correspondingly higher; and a probability that a terminal device with low mobility or a low speed stays in a small range is higher, and a probability that the network device needs to page the terminal device only within a small range is correspondingly higher. In this grouping manner, when paging the terminal device with high mobility or the high speed, the network can be prevented as much as possible from generating unnecessary paging for the terminal device with the low mobility or the low speed.

With reference to the ninth aspect, in some implementations of the ninth aspect, the second grouping parameter includes a parameter related to a service of the terminal device.

With reference to the ninth aspect, in some implementations of the ninth aspect, the second grouping parameter is determined based on a quality of service parameter of the service of the terminal device, and/or a service type of the terminal device, and/or a mobility state or a speed of the terminal device.

With reference to the ninth aspect, in some implementations of the ninth aspect, sending the fourth grouping parameter to the terminal device includes:
the access network device broadcasts the fourth grouping parameter to the terminal device; or
the access network device sends the fourth grouping parameter to the terminal device by using a radio resource control RRC message.

According to the foregoing technical solution, the terminal devices are grouped by distinguishing features of different terminal devices, to reduce a probability that the terminal device performs unnecessary paging reception. The terminal devices may be grouped based on the service features of the terminal devices, and the terminal devices with the same/similar service types or service requirements are added to the same group. It is considered that, in practice, the probability that the terminal devices with the similar services are paged at the same time is higher. In this grouping manner, when a service or a type of service arrives, it can be ensured as much as possible that terminal devices to be paged this time belong to a same group. This decreases the probability that the unrelated terminal device is paged. In addition, the terminal devices may be alternatively grouped based on the mobility feature. The terminal devices with the same or similar mobility states or the same or similar speeds are added to the same group. It is considered that, in practice, the probability that the terminal device with high mobility or the high speed changes the camped cell is high, and the probability that the network device needs to page the terminal device within the large range is correspondingly higher; and the probability that the terminal device with low mobility or the low speed stays in the small range is higher, and the probability that the network device needs to page the terminal device only within the small range is correspondingly higher. In this grouping manner, when paging the terminal device with high mobility or the high speed, the network can be prevented as much as possible from generating the unnecessary paging for the terminal device with the low mobility or the low speed.

According to a tenth aspect, a communication apparatus is provided, including units configured to perform the steps in the communication method according to any one of the first aspect to the ninth aspect and the implementations of the first aspect to the ninth aspect.

In a design, the communication apparatus is a communication chip. The communication chip may include an input circuit or interface configured to send information or data, and an output circuit or interface configured to receive information or data.

In another design, the communication apparatus is a communication device (for example, a terminal device, a P-CSCF device, or a gateway device). A communication chip may include a transmitting machine configured to send information or data, and a receiving machine configured to receive information or data.

According to an eleventh aspect, a communication device is provided, including a processor and a memory. The memory is configured to store a computer program. The processor is configured to invoke the computer program from the memory and run the computer program, to enable the communication device to perform the communication method according to any one of the first aspect to the ninth aspect and the possible implementations of the first aspect to the ninth aspect.

Optionally, there are one or more processors, and there are one or more memories.

Optionally, the memory may be integrated with the processor, or the memory and the processor are separately disposed.

Optionally, the communication device further includes a transmitting machine (transmitter) and a receiving machine (receiver).

According to a twelfth aspect, a communication system is provided, including the foregoing terminal device and network device.

According to a thirteenth aspect, a computer program product is provided. The computer program product includes a computer program (which may also be referred to as code or instructions). When the computer program is run, a computer is enabled to perform the method according to any one of the possible implementations of the first aspect to the ninth aspect.

According to a fourteenth aspect, a computer-readable medium is provided. The computer-readable medium stores a computer program (which may also be referred to as code or instructions). When the computer program is run on a computer, the computer is enabled to perform the method according to any one of the possible implementations of the first aspect to the ninth aspect.

According to a fifteenth aspect, a chip system is provided, including a memory and a processor. The memory is configured to store a computer program. The processor is configured to invoke the computer program from the memory and run the computer program, to enable a communication device, on which the chip system is mounted, to perform the method according to any one of the possible implementations of the first aspect to the ninth aspect.

The chip system may include an input circuit or interface configured to send information or data, and an output circuit or interface configured to receive information or data.

According to the solutions in embodiments of this application, for a possible cause of the paging false alarm, in a paging false alarm reduction solution, determining and selection of a paged object are optimized and impact of the paging on the unrelated terminal device is reduced in four manners: distinguishing whether the paging is new paging or repeated paging, reporting the stay probability information of the camped or visited cell by the terminal device, distinguishing the terminal devices in the different RRC statuses during the paging, and grouping the terminal devices, based on the features of the different terminal devices, to reduce the probability that the terminal device performs unnecessary paging reception. This reduces the paging false alarm, to avoid as much as possible generating unnecessary UE power consumption.

### BRIEF DESCRIPTION OF DRAWINGS

FIG. 1 is a schematic diagram of a system to which an embodiment of this application is applicable;
FIG. 2 is a schematic diagram of a paging scenario to which an embodiment of this application is applicable;
FIG. 3 is a schematic diagram of a paging process to which an embodiment of this application is applicable;
FIG. 4 is a schematic diagram of an example of a paging method according to this application;
FIG. 5 is a schematic diagram of another example of a paging method according to this application;
FIG. 6 is a schematic diagram of another example of a paging method according to this application;
FIG. 7 is a schematic diagram of another example of a paging method according to this application;
FIG. 8 is a schematic diagram of another example of a paging method according to this application;
FIG. 9 is a schematic diagram of another example of a paging method according to this application;
FIG. 10 is a schematic block diagram of an example of a paging apparatus applicable to this application;
FIG. 11 is a schematic block diagram of another example of a paging apparatus applicable to this application;
FIG. 12 is a schematic block diagram of an example of a terminal device applicable to this application; and
FIG. 13 is a schematic block diagram of an example of a network device applicable to this application.

### DESCRIPTION OF EMBODIMENTS

The following clearly and completely describes the technical solutions of this application with reference to the accompanying drawings. It is clear that the described embodiments are some but not all of embodiments of this application. All other embodiments obtained by a person of ordinary skill in the art based on embodiments of this application without creative efforts shall fall within the protection scope of this application.

It should be understood that the technical solutions in embodiments of this application may be applied to various paging systems, for example, a global system for mobile communication (Global System for Mobile Communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunication system (Universal Mobile Telecommunication System, UMTS), a worldwide interoperability for microwave access (Worldwide Interoperability for Microwave Access, WiMAX) system, a future 5th generation (5th Generation, 5G) system, and a new radio (New Radio, NR) system.

Usually, a conventional paging system supports a limited quantity of connections, and is easily implemented. However, with development of paging technologies, a mobile paging system not only supports conventional paging, but also supports, for example, device-to-device (Device-to-Device, D2D) paging, machine-to-machine (Machine-to-Machine, M2M) paging, machine type communication (Machine Type Communication, MTC), and vehicle-to-everything (Vehicle-to-Everything, V2X) paging, for example, vehicle-to-vehicle (Vehicle-to-Vehicle, V2V) paging, vehicle-to-infrastructure (Vehicle-to-Infrastructure, V2I) paging, vehicle-to-pedestrian (Vehicle-to-Pedestrian, V2P) call, or vehicle-to-network (Vehicle-to-Network, V2N) paging.

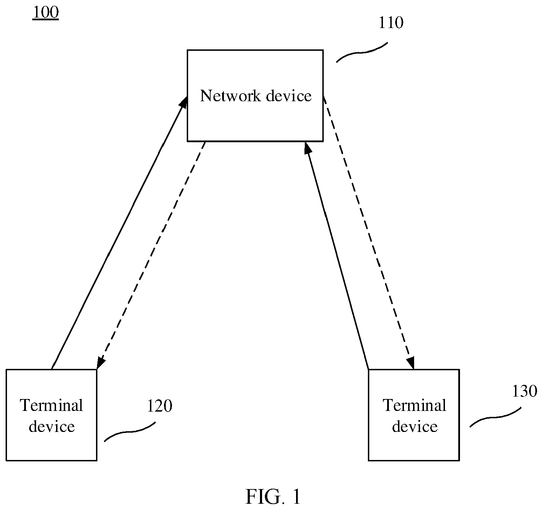

FIG. 1 is a schematic diagram of a system to which an embodiment of this application is applicable. As shown in FIG. 1, a system 100 may include a network device 110 and terminal devices 120 and 130. The network device is wirelessly connected to the terminal devices. It should be understood that, in FIG. 1, an example in which the system includes one network device is merely used for description, but this embodiment of this application is not limited thereto. For example, the system may alternatively include more network devices. Similarly, the system may alternatively include more terminal devices. It should be further understood that the system may also be referred to as a network. This is not limited in this embodiment of this application.

The network device 110 in this embodiment of this application may be a device configured to page a terminal device. The network device may be a base station (Base Transceiver Station, BTS) in a global system for mobile communication (GSM Global System for Mobile Communication, GSM) or a code division multiple access (Code Division Multiple Access, CDMA) system, or may be a base station (NodeB, NB) in a wideband code division multiple access (Wideband Code Division Multiple Access, WCDMA) system, or may be an evolved base station (evolved NodeB, eNB or eNodeB) in a long term evolution system, or may be a radio controller in a cloud radio access network (Cloud Radio Access Network, CRAN) scenario. Alternatively, the network device may be a relay station, an access point, a vehicle-mounted device, a wearable device, a network device in a 5G network, a network device in a future evolved public land mobile network (Public Land Mobile Network, PLMN) network, or the like.

In addition, in this embodiment of this application, the network device 110 provides a service for a cell, and the terminal device pages the network device by using a transmission resource (for example, a frequency domain resource, namely, a spectrum resource) used by the cell. The cell may be a cell corresponding to the network device (for example, a base station). The cell may belong to a macro base station, or may belong to a base station corresponding to a small cell (small cell). The small cell herein may include a metro cell (Metro cell), a micro cell (Micro cell), a pico cell (Pico cell), a femto cell (Femto cell), and the like. These small cells have features of small coverage and low transmit power, and are applicable to providing a high-rate data transmission service. In addition, the cell may be alternatively a hyper cell (Hyper cell).

The terminal device 120 in this embodiment of this application may be referred to as user equipment (User Equipment, UE), an access terminal, a subscriber unit, a subscriber station, a mobile station, a remote station, a remote terminal, a mobile device, a user terminal, a terminal, a wireless paging device, a user agent, or a user apparatus. The terminal device may page one or more core networks through a radio access network (Radio Access Network, RAN). For example, the user equipment may be a mobile phone (also referred to as a "cellular" phone) and a computer with a mobile terminal. For example, the user equipment may be alternatively a portable, pocket-sized, handheld, computer built-in, or vehicle-mounted mobile apparatus, which exchanges voice and/or data with the radio access network.

The terminal device 120 may be a station (STATION, ST) in a WLAN, or may be a smartphone, a portable computer, a global positioning system, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device with a wireless paging function, a computing device, another processing device connected to a wireless modem, a vehicle-mounted device, an Internet of Vehicles terminal, a computer, a laptop computer, a handheld paging device, a handheld computing device, a satellite wireless device, a wireless modem card, a television set-top box (set-top box, STB), customer-premises equipment (customer-premises equipment, CPE), another device configured for paging in a wireless system, or a next generation paging system, for example, a terminal device in the 5G network or a terminal device in the future evolved public land mobile network PLMN.

By way of example and not limitation, in this embodiment of this application, the terminal device 130 may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that is directly worn on a body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, for example, smartwatches or smart glasses, and devices that focus on only one type of application function and need to work with other devices such as smartphones, for example, various smart bands or smart jewelry for monitoring physical signs.

In addition, in this embodiment of this application, the terminal device 130 may be alternatively a terminal device in an Internet of Things (Internet of Things, IoT) system. An IoT is an important part in future development of information technologies. A main technical feature of the IoT is to connect a thing to a network by using a paging technology, to implement an intelligent network for human-machine interconnection and thing-thing interconnection.

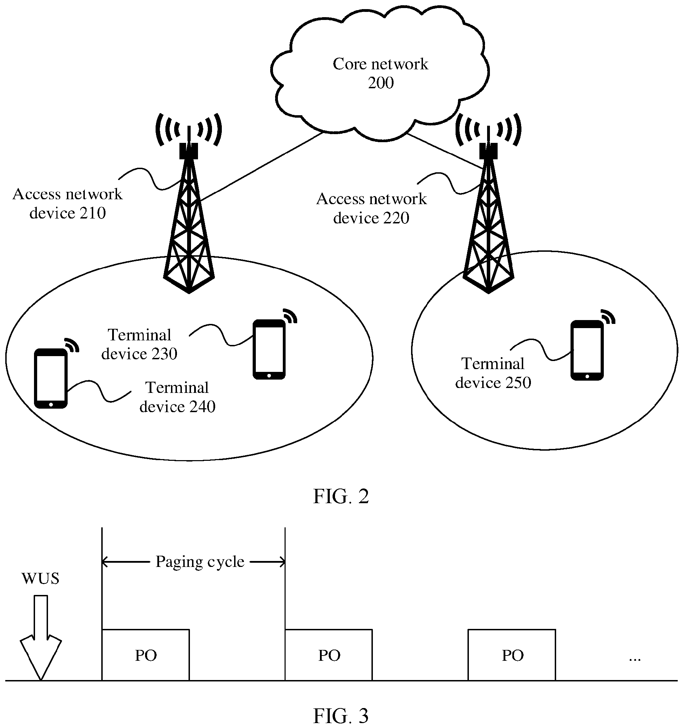

FIG. 2 is a schematic diagram of a paging scenario to which an embodiment of this application is applicable. As shown in FIG. 2, a terminal device 230 and a terminal device 240 are located in a cell provided by an access network device 210, and a terminal device 250 is located in a cell provided by an access network device 220. The terminal device 230, the terminal device 240, and the terminal device 250 belong to a same terminal device group.

It should be understood that a core network 200 has main functions of providing a user connection, managing a user, and completing service bearing, and serves as an interface provided by a bearer network for an external network. Establishment of the user connection includes functions such as mobility management (mobility management, MM), call management (connection management, CM), switching/routing, and recording notification. User management includes user description, quality of service (Quality of Service, QoS), user paging accounting (accounting), a virtual home environment (virtual home environment, VHE), and security (corresponding security measures provided by an authentication center includes security management for a mobile service and security processing for external network access). A bearer connection (access) includes access to an external public switched telephone network (Public Switched Telephone Network, PSTN), an external circuit data network and packet data network, the Internet (Internet), an intranet (intranet), a short message service (Short Message Service, SMS) server of a mobile network, and the like.

In this embodiment of this application, a basic service that can be provided by the core network 200 includes mobile office, electronic commerce, paging, an entertainment service, a travel, a location-based service, a telemetry (telemetry) service, a simple message transfer service (monitoring control), or the like.

By way of example and not limitation, a core network device may include function units such as an access and mobility management function (access & mobility function, AMF), a session management function (session management function, SMF), a policy control function (policy control function, PCF), and a user plane function (user plane function, UPF). These function units may work independently, or may be combined to implement some control functions. For example, the AMF, the SMF, and the PCF may be combined as a management device, to complete access control and mobility management functions such as access authentication, security encryption, and location registration of a terminal device, session management functions such as establishment, release, and change of a user plane transmission path, and functions of analyzing some slice (slice)-related data (for example, congestion) and terminal device-related data. The UPF mainly completes functions such as routing and forwarding of user plane data, for example, is responsible for filtering a data packet of a terminal device, transmitting/forwarding data, controlling a rate, and generating charging information.

The access network device 210 may include an access network/radio access network (Radio Access Network, RAN) device, and include a plurality of 5G-RAN nodes. The 5G-RAN node may be an access point (access point, AP), a next-generation new base station (NR NodeB, gNB), a next-generation evolved base station (ng-eNB, gNB), a transmission and reception point (transmission receive point, TRP), a transmission point (transmission point, TP), or another access node. The 5G-RAN node may further include a central unit (central unit, CU) and a distributed unit (distributed unit, DU) inside.

In addition, the access network device 220 may be a base station (Base Transceiver Station, BTS) in SM or CDMA, or may be a base station (NodeB, NB) in WCDMA, or may be an evolved base station (evolved NodeB, eNB or eNodeB) in LTE, a relay station, an access point, a vehicle-mounted device, a wearable device, an access network device in a 5G network, an access network device in a future evolved PLMN network, or the like. This is not particularly limited in this application.

It should be noted that, in this embodiment of this application, the access network device 220 provides a service for a cell, and the terminal device pages the access network device by using a transmission resource (for example, a frequency domain resource, namely, a spectrum resource) used by the cell. The cell may be a cell corresponding to the access network device (for example, a base station). The cell may belong to a macro base station, or may belong to a base station corresponding to a small cell (Small cell). The small cell herein may include a metro cell (metro cell), a micro cell (micro cell), a pico cell (Pico cell), a femto cell (femto cell), and the like. These small cells have features of small coverage and low transmit power, and are applicable to providing a high-rate data transmission service.

Each access network device may include one or more antennas. Each access network device may page a plurality of terminal devices. The access network device may send data or information to the terminal device through a forward link (also referred to as a downlink), and receive data or information from the terminal device through a reverse link (also referred to as an uplink). Each antenna (or antenna group including a plurality of antennas) and/or area designed for paging is referred to as a sector of the access network device. For example, the antenna group may be designed to page a terminal device in a sector within a coverage area of the access network device. The access network device may send a signal to all terminal devices in the sector, corresponding to the access network device, through a single antenna or a multi-antenna transmit diversity. In a process in which the access network device pages the terminal device through the forward link, a transmit antenna of the access network device may improve a signal-to-noise ratio of the forward link through beamforming.

In this embodiment of this application, the terminal devices 230, 240, and 250 are described in detail in FIG. 1, and details are not described herein again.

It should be noted that the foregoing "device" may also be referred to as an entity, a network element, an apparatus, a module, or the like. This is not particularly limited in this application. In addition, in this application, for ease of understanding and description, the description of the "network element" is omitted in some descriptions. For example, a RAN network element is referred to as a RAN for short. In this case, the "RAN network element" should be understood as a RAN network element or a RAN entity. Same or similar cases are not described below.

In addition, aspects or features in embodiments of this application may be implemented as a method, an apparatus or a product that uses standard programming and/or engineering technologies. The term "product" used in this application covers a computer program that can be accessed from any computer-readable component, carrier, or medium. For example, the computer-readable medium may include but is not limited to a magnetic storage component (for example, a hard disk, a floppy disk, or a magnetic tape), an optical disc (for example, a compact disc (Compact Disc, CD), a digital versatile disc (Digital Versatile Disc, DVD)), a smart card, and a flash component (for example, an erasable programmable read-only memory (Erasable Programmable Read-Only Memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

It should be noted that, in embodiments of this application, a plurality of applications may be run at an application layer. In this case, an application for performing the method in embodiments of this application and an application used to control a receiving end device to implement an action corresponding to received data may be different applications.

FIG. 3 is a schematic diagram of a paging process to which an embodiment of this application is applicable. As shown in FIG. 3, a terminal device in a radio resource control idle RRC_IDLE state or a radio resource control inactive RRC_INACTIVE state listens to a paging occasion PO of the terminal device within each paging cycle (paging cycle), to determine whether paging is performed in a network.

To make descriptions of embodiments of this application clearer, the following briefly describes a basic procedure of paging.

First, a network device selects a specific paging range, and sends paging downlink control information DCI at a PO.

It should be noted that a paging range is an area in which the network device sends paging. The area may include one or more cells of one or more base stations, and the area is determined by the network device. For example, for radio resource control idle RRC_IDLE UE, the network device may use, as a paging range, a tracking area (Tracking Area, TA) to which the UE belongs; and for radio resource control inactive RRC_INACTIVE UE, the network device may use, as a paging range, a radio access network (RAN)-based notification area (RAN-based Notification Area, RNA) to which the UE belongs.

The paging DCI may include scheduling information (including time-frequency domain information of a resource for scheduling a paging message and other scheduling information) of the paging message (paging message), a short message (short message), and/or the like. Specific included content is shown in the following table.

**Table 1**

| Bit field (bit field) | Size (unit: bit) | Definition |
|---|---|---|
| Short message indicator (Short message indicator) | 2 | Indicate a content type in control information, where |
| | | "01" indicates that there is only scheduling information of a paging message, |
| | | "10" indicates that there is only a short message, |
| | | "11" indicates that there are both scheduling information of a paging message and a short message, and |
| | | "00" is a reserved value in the conventional technology |
| Short message (Short message) | 8 | Indicate a system information update and/or an earthquake and tsunami warning/a commercial mobile alert |
| Frequency domain resource assignment (Frequency domain resource assignment) information | Obtained through calculation | Indicate a frequency domain resource location of a paging message |
| Time domain resource assignment (Time domain resource assignment) information | 4 | Indicate a time domain resource location of a paging message |
| VRB-to-PRB mapping | 1 | Indicate that mapping from a virtual resource block (virtual resource block, VRB) to a physical resource block (physical resource block, PRB) is interleaved or non-interleaved |
| Modulation and coding scheme | 5 | Indicate a modulation order and a target coding rate |
| Transport block (transport block, TB) scaling | 2 | Indicate size scaling of a transport block |
| Reserved bit (reserved bit) | 6 | A bit that is not used in the conventional technology |

Then, after receiving the paging DCI sent by the network device, user equipment UE determines a subsequent operation based on content of the paging DCI. Details are as follows.

If the paging DCI includes the scheduling information of the paging message, the UE receives and decodes the paging message on a physical downlink shared channel (Physical Downlink Shared Channel, PDSCH) based on the scheduling information, and then determines the subsequent operation based on content of the paging message. The paging message includes UE identification information of one or more UE paged by the network and/or access type information of paged UE. After decoding the paging message, the UE determines whether the paging message includes a UE identifier of the UE. If the paging message does not include the UE identifier of the UE, the UE ignores the paging message. If the paging message includes the UE identifier of the UE, the UE determines the subsequent operation based on other content in the paging message.

If the paging DCI includes the short message, the UE receives updated system information and/or the earthquake and tsunami warning or the commercial mobile alert based on an indication of the short message.

If the paging DCI includes the scheduling information of the paging message and the short message, the UE separately receives the paging message, and the updated system information and/or the earthquake and tsunami warning or the commercial mobile alert according to a specified procedure.

It should be noted that, based on different network elements that trigger paging, the paging may be classified into CN paging triggered by a core network (Core Network, CN) and RAN paging triggered by a radio access network (Radio Access Network, RAN). The network device may initiate the CN paging for the RRC_IDLE UE, and may initiate the CN paging or the RAN paging for the RRC _INACTIVE UE.

It should be understood that one piece of paging initiated by the network device may be for one or more UE, in other words, one paging message may carry UE identifiers of the one or more UE.

To save energy of the UE, an energy-saving signal may be introduced in a paging mechanism, and a wake-up signal WUS is a type of energy-saving signal. Specifically, in a paging process, the network device may send the WUS before the paging occasion PO or on the PO, to indicate whether the UE needs to listen to the PO or receive the paging message subsequently, so as to achieve effect of avoiding unnecessary paging reception by the UE. A type of the WUS may include but is not limited to downlink control information DCI, a physical layer signal/sequence, a media access control control element MAC CE, radio resource control RRC signaling, and the like.

Although the energy-saving signal is introduced, there is still a case in which all the UE receives and decodes the paging message on the PO due to various reasons. The UE finally finds that there is no UE identifier of the UE in the paging message, in other words, the network device actually does not page the UE. As a result, unnecessary paging listening and reception by the UE are caused, a paging false alarm is generated, and unnecessary UE power consumption is caused.

Currently, in the paging mechanism, possible causes of the paging false alarm are as follows.
(1) A plurality of pieces of UE listen to a same PO.
   PO locations obtained through calculation by different UE may be the same. When the plurality of pieces of UE listen to the same PO, in the paging mechanism, when receiving paging DCI, the UE obtains only scheduling information of a paging message, and cannot distinguish whether the paging message is a paging message for the UE. The UE can determine, based on UE identification information in the paging message, only after subsequently receiving and decoding the paging message that is on the PDSCH, whether first paging is for the UE. Therefore, for UE that is actually not paged, there are unnecessary reception and decoding on the paging message, and unnecessary UE power consumption is generated.
(2) Paging repetition
   When the network pages the UE, if paged UE does not successfully receive the paging, the network device further continues subsequently to perform paging on a related PO. As a result, other unrelated UE performs unnecessary reception and decoding on the paging message again.
(3) A paging range is not optimized.

When paging the UE, the network sends the paging within a specific paging range. All UE that has a same PO location as the paged UE and that is within the paging range receives the paging. However, all the UE other than the paged UE performs unnecessary reception and decoding on the paging message. In addition, if the network does not successfully page target UE within the specific range during paging at a time, the network device may change or expand the paging range to continue paging. As a result, the paging involves more pieces of UE in a larger range. Therefore, if the paging range determined by the network is not optimized, more pieces of unrelated UE generate the paging false alarm.

To resolve the foregoing problem, this application designs a paging false alarm reduction solution. For a possible cause of a paging false alarm, determining and selection of a paged object are optimized and impact of paging on unrelated UE is reduced in three manners: distinguishing whether the paging is new paging or repeated paging, reporting information about a camped or visited cell by UE, and distinguishing UE in different RRC statuses during the paging. This reduces the paging false alarm, to avoid as much as possible generating unnecessary UE power consumption.

The following specifically describes a paging false alarm reduction method according to embodiments of this application.

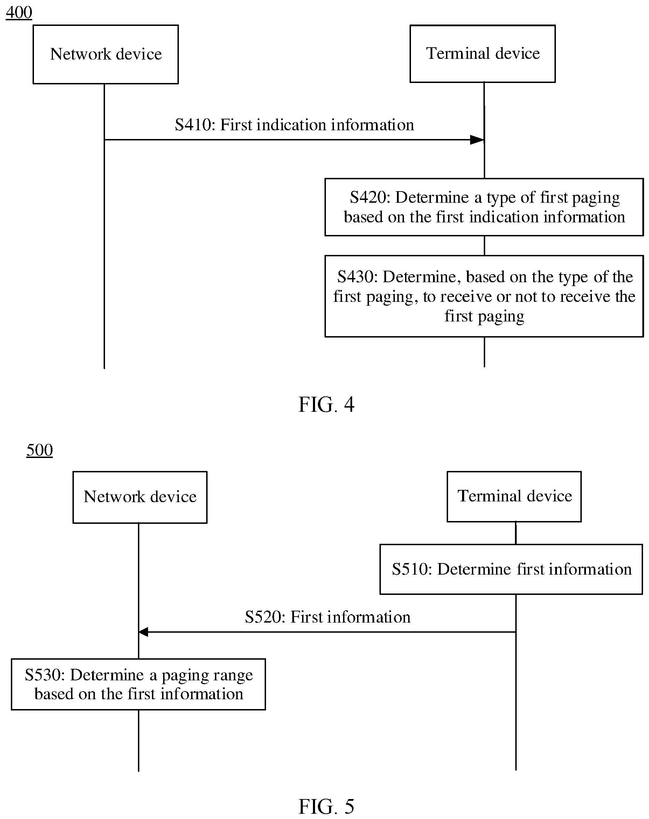

FIG. 4 is a schematic diagram of an example of a paging method according to this application. The method includes the following steps.

S410: A network device sends first indication information to a terminal device, and the terminal device receives the first indication information from the network device. A type of first paging includes paging non-repetition or paging repetition (paging repetition), and the first indication information is used to determine the type of the first paging.

In this embodiment of this application, the network device selects a specific paging range before sending the indication information to the terminal device.

It should be understood that a paging range is an area in which the network device sends paging, and the area is determined by the network device. For example, for RRC idle UE, the network device may use, as a paging range, a tracking area (Tracking Area, TA) to which the UE belongs, and for RRC inactive UE, the network device may use, as a paging range, a radio access network (RAN) notification area (RAN Notification Area, RAN) to which the UE belongs.

It should be further understood that the first indication information may be carried in, but not limited to, downlink control information (Downlink Control Information, DCI), a physical layer signal/sequence (sequence), a media access control control element (MAC Control Element, MAC CE), a radio resource control (Radio Resource Control, RRC) message, or the like. Specific carrying signaling or a specific carrying message may include but is not limited to a wake-up signal (Wake-Up Signal, WUS), paging DCI, a paging message, and the like.

Optionally, in this embodiment of this application, the paging repetition satisfies: If content of a paging message (paging message) of the first paging is the same as content of a paging message of second paging, the first paging is repeated paging, and the second paging is paging sent before the first paging; or if a terminal device of the first paging belongs to a terminal device of second paging, the first paging is repeated paging, and the second paging is paging sent before the first paging.

Specifically, that the first paging is repeated paging if the content of the paging message of the first paging is the same as the content of the paging message of the second paging may be understood as that both identification information and/or access type information of the terminal device that is paged this time and a terminal device that is paged previously, and specific paging messages are the same.

It should be understood that content of a paging message may include but is not limited to content such as identification information of a terminal device, access type information, a system information update indication, and an earthquake and tsunami warning/a commercial mobile alert.

It should be noted that, in addition to the foregoing content of the paging message, the technical solutions of this application do not exclude other content that may be newly introduced in the paging message in the future.

Specifically, that the first paging is repeated paging if the terminal device of the first paging belongs to the terminal device of the second paging may be understood as that the terminal device that is paged this time belongs to a part or all of a terminal device that has been paged before the current paging. The content of the paging message is not limited herein, and only paged user equipment is considered. For example, if UE paged for the first time is UE 1, UE 2, and UE 3, and UE paged for the second time is the UE 1 and the UE 2, paging of the second time is repeatedly sent paging because the UE 1 and the UE 2 have been paged before. For another example, if UE paged for the first time is UE 1 and UE 2, and UE paged for the second time is the UE 1, the UE 2, and UE 3, paging of the second time is not repeatedly sent paging for the UE 3. For still another example, if UE paged for the first time is UE 1, UE 2, and UE 3, and UE paged for the second time is the UE 1 and UE 4, paging of the second time is not repeatedly sent paging for the UE 4.

A manner in which the network device sends the first indication information to the terminal device may be an explicit manner, for example, indicating the type of the first paging by using a bit field/field, or may be an implicit manner, for example, indicating the type of the first paging by using a same character or value.

The following separately describes three manners in which the network device sends the first indication information.

### Manner 1

Optionally, in an embodiment of this application, the network device sends the first indication information when sending paging, that is, the network device sends the first indication information during each piece of paging. The first indication information is used by the terminal device to determine whether the type of the first paging is the paging non-repetition or the paging repetition.

This embodiment uses an explicit indication manner. The type of the first paging is indicated by using the bit field/field, and a correspondence between values of different bit fields and the type of the first paging may be configured by the network device, as shown in Table 2. For example, the network device sends 1-bit first indication information to the terminal device. The first indication information being "0" indicates that the type of the first paging is newly sent paging, namely, the paging non-repetition. The first indication information being "1" indicates that the type of the first paging is repeatedly sent paging. For another example, the network device may send 2-bit first indication information to the terminal device. The first indication information being "00" indicates that the type of the first paging is the paging non-repetition. The first indication information being "01" indicates that the type of the first paging is repeatedly sent paging. The first indication information being "10" indicates that the type of the first paging is the paging non-repetition. For still another example, the network device may send 3 -bit first indication information to the terminal device. The first indication information being "000" indicates that the type of the first paging is the paging non-repetition. The first indication information being "001" indicates that the type of the first paging is repeatedly sent paging. The first indication information being "010" indicates that the type of the first paging is the paging non-repetition.

It should be noted that the first indication information may be sent by the network device before the paging, or may be sent by the network device when sending the paging.

**Table 2**

| Bit field | | | | Paging type |
|---|---|---|---|---|
| Size | 1 bit | 2 bits | 3 bits | |
| Value | "0" | "00" | "000" | Paging non-repetition |
| | "1" | "01" | "001" | Paging repetition |
| | | "10" | "010" | Paging non-repetition |
| | | ... | ... | ... |

Table 2 is merely used as an example for description. A quantity of bits occupied by the first indication information is not limited in this embodiment of this application.

### Manner 2

Optionally, in an embodiment of this application, alternatively, the network device may send the first indication information when sending new paging, to indicate that the current paging is unrepeated paging, or the network device sends the first indication information when repeatedly sending paging, to indicate that the current paging is repeated paging.

In other words, the network device may send the first indication information only when sending the new paging, to determine that the type of the first paging is the paging non-repetition. If the type of the first paging is the paging repetition, the network device may not send the first indication information. Alternatively, the network device sends the first indication information only when sending the repeated paging, to determine that the first paging is repeated paging. If the type of the first paging is the paging non-repetition, the network device may not send the first indication information.

It should be noted that the new paging is unrepeated paging. The new paging satisfies: If content of a paging message (paging message) of the first paging is different from content of a paging message of second paging, the first paging is new paging, and the second paging is paging sent before the first paging, or if one or more terminal devices of the first paging do not belong to a terminal device of second paging, the first paging is new paging, and the second paging is paging sent before the first paging. For example, if UE paged for the first time is UE 1 and UE 2, and UE paged for the second time is the UE 1, the UE 2, and UE 3, second paging is newly sent paging because UE 3 is not paged.

It should be noted that the first indication information may be carried in, but not limited to, the downlink control information (Downlink Control Information, DCI), the physical layer signal/sequence (sequence), the media access control control element (MAC Control Element, MAC CE), the radio resource control (Radio Resource Control, RRC) message, or the like. The specific carrying signaling or the specific carrying message may include but is not limited to the wake-up signal (Wake-Up Signal, WUS), the paging DCI, the paging message, and the like.

It should be further noted that the first indication information is carried in different signaling, and the terminal device performs different processing. Specifically, the network device sends the first indication information before the paging. It is assumed that the first indication information is carried in the wake-up signal WUS. In this case, the terminal device determines whether a PO needs to be listened to (that is, the paging DCI needs to be received) and the paging message needs to be received subsequently. Alternatively, the network device sends the first indication information during the paging. It is assumed that the first indication information is carried in the paging DCI. In this case, the terminal device determines whether the paging message needs to be received subsequently.

This embodiment uses an explicit indication manner. The type of the first paging is indicated by using the bit field/field, and a correspondence between values of different bit fields and the type of the first paging may be configured by the network device. For example, when determining that the type of the sent paging is new paging, the network device may send 1-bit first indication information "0" to indicate that the first paging is newly sent paging, or when determining that the type of the sent paging is the paging repetition, the network device does not send the first indication information. In this case, the terminal device may determine, based on the fact that the received signaling or message (for example, the paging DCI) that carries the indication information does not carry the first indication information, that the current paging is repeated paging. As a result, the network device does not receive and decode the corresponding paging message. For another example, when determining that the type of the sent paging is the paging repetition, the network device may send 2-bit first indication information "00" to indicate that the first paging is repeatedly sent paging, or when determining that the type of the sent paging is new paging, the network device does not send the first indication information. In this case, the terminal device may determine, based on the fact that the received paging DCI does not carry the first indication information, that the current paging is unrepeated paging. As a result, the terminal device receives and decodes the corresponding paging message, and performs a subsequent operation. For another example, when determining that the type of the sent paging is the paging repetition, the network device may send 3-bit first indication information "000" to indicate that the first paging is newly sent paging. When determining the type of the sent paging is the paging repetition, the terminal device does not send the first indication information. In this case, the terminal device may determine, based on the fact that the received paging DCI does not carry the first indication information, that the current paging is unrepeated paging. As a result, the terminal device receives and decodes the corresponding paging message, and performs a subsequent operation or the like.

### Manner 3

Optionally, in an embodiment of this application, the network device may alternatively send same first indication information for a group of same paging, to determine the type of the first paging is the paging non-repetition or the paging repetition.

This embodiment uses an implicit indication manner. The type of the first paging is indicated by using the same character or value. A correspondence between the character or the value and the type of the first paging may be configured by the network device. For example, it is assumed that a group of same paging is sent for three times in total (that is, the paging sent for the first time is newly sent paging, and the paging sent for the second time and the third time is repeatedly sent paging). In this case, the network device sends a same character or value (for example, "A" or "1") during the paging sent for the three times, to reflect that the paging sent for the three times is a group of same paging. It is assumed that another group of same paging is subsequently sent twice in total (that is, the paging sent for the first time is newly sent paging, and the paging sent for the second time is repeatedly sent paging). In this case, the network device sends another same character or value (for example, "B" or "2") during the paging sent twice, to reflect that the paging sent twice is another group of same paging. Therefore, the network device sends the same first indication information in the same group of paging, so that the terminal device can indirectly determine that the type of the first paging is the paging non-repetition or the paging repetition.

S420: The terminal device determines the type of the first paging based on the first indication information.

The following separately describes how the terminal device determines the type of the first paging after receiving the first indication information.

### For Manner 1 and Manner 2

Because a manner in which the network device sends the first indication information is an explicit indication, the first indication information directly indicates that the type of the first paging is the paging non-repetition or the paging repetition, and the terminal device may directly determine, based on the first indication information, that the type of the first paging is the paging non-repetition or the paging repetition.

It should be noted that, in Manner 1, the network device sends the first indication information each time the network device sends the paging, and in Manner 2, the network device selectively sends the first indication information, and the terminal device may further determine the paging type of the first paging based on whether there is the first indication information.

### For Manner 3

When receiving the first indication information, the terminal device determines whether the first indication information of the first paging is the same as indication information received last time, to determine the paging type of the first paging. To be specific, if the first indication information of the first paging is different from first indication information received last time, it is determined that the type of the first paging is the paging non-repetition, and the first paging is received, or if the first indication information of the first paging is the same as first indication information received last time, it is determined that the type of the first paging is the paging repetition, and the first paging is not received.

S430: Determine, based on the type of the first paging, to receive or not to receive the first paging.

The following separately describes how the terminal device determines, after determining the type of the first paging, whether to receive the first paging.

### For Manner 1 and Manner 2

Optionally, in an embodiment of this application, the terminal device may determine, based on the fact that the type of the first paging is the paging non-repetition or the paging repetition and with reference to a case of receiving paging previously, whether to receive the first paging. If the type of the first paging is the paging non-repetition, the first paging is received. If the type of the first paging is the paging repetition, the first paging is not received.

Specifically, if the type of the first paging is the paging repetition, and the terminal device has not received paging before the first paging, the first paging is received, or if the type of the first paging is the paging repetition, and the terminal device has received paging before the first paging, the first paging is not received.

It should be understood that, that the terminal device has not received the paging includes but is not limited to: The terminal device has not received the paging within specific duration (for example, N paging cycles) before the first paging and/or in a currently camped serving cell, or the terminal device has not received paging the same as the first paging before the first paging.

It should be further understood that, that the terminal device has received the paging includes but is not limited to: The terminal device has received the paging within specific duration (for example, N paging cycles) before the first paging and/or in a currently camped serving cell, or the terminal device has received paging the same as the first paging before the first paging.

Optionally, in an embodiment of this application, the terminal device may alternatively determine, with reference to the wake-up signal WUS, whether to receive the paging. For example, the WUS sent by the network device is received before the paging occasion PO or on the PO. If the WUS indicates that the terminal device needs to receive paging, the terminal device determines, in the foregoing manner based on the first indication information and a case of receiving paging by the terminal device, whether to receive the first paging. If the WUS indicates that the terminal device does not need to receive paging, the terminal device may not receive the first paging.

Specifically, when the WUS indicates that the terminal device needs to receive the paging, if the first paging is newly sent paging, the terminal device receives the first paging, or if the first paging is repeatedly sent paging, and the terminal device has not received the paging before the first paging, the terminal device receives the first paging, or if the type of the first paging is the paging repetition, and the terminal device has received the paging before the first paging, the terminal device does not receive the first paging.

It should be understood that, that the terminal device has not received the paging includes but is not limited to: The terminal device has not received the paging within specific duration (for example, N paging cycles) before the first paging and/or in a currently camped serving cell, or the terminal device has not received paging the same as the first paging before the first paging.

It should be further understood that, that the terminal device has received the paging includes but is not limited to: The terminal device has received the paging within specific duration (for example, N paging cycles) before the first paging and/or in a currently camped serving cell, or the terminal device has received paging the same as the first paging before the first paging.

It should be noted that, that the terminal device determines, based on the type of the first paging, not to receive the first paging may be understood as follows: If the first indication information is sent by the network device before the network device sends the paging, the terminal device may determine the type of the first paging based on the first indication information. If the first indication information indicates that the first paging is repeated paging and the terminal device has received the paging before, the terminal device subsequently may not need to listen to the PO and may not need to receive and decode the paging message. If the first indication information is sent by the network device when the network device sends the paging, for example, sent in the paging DCI, or sent together with the paging DCI, the terminal device needs to listen to the first indication information on the PO, and then determine the type of the first paging based on the first indication information. If the first indication information indicates that the first paging is repeated paging and the terminal device has received the paging before, the terminal device subsequently may not receive and decode the corresponding paging message.

### For Manner 3

Optionally, in an embodiment of this application, the terminal device may determine, based on the fact that the type of the first paging is the paging non-repetition or the paging repetition and with reference to a case of receiving paging previously, whether to receive the first paging. If the first indication information of the first paging is different from first indication information received last time, it is determined that the type of the first paging is the paging non-repetition, and the first paging is received, or if the first indication information of the first paging is the same as first indication information received last time, it is determined that the type of the first paging is the paging repetition, and the first paging is not received.

Optionally, in an embodiment of this application, the terminal device may alternatively determine, with reference to a wake-up signal WUS, whether to receive the paging. For example, the WUS sent by the network device is received before the paging occasion PO or on the PO. If the WUS indicates that the terminal device needs to receive paging, the terminal device determines, in the foregoing manner based on the first indication information and a case of receiving paging by the terminal device, whether to receive the first paging. If the WUS indicates that the terminal device does not need to receive paging, the terminal device may not receive the first paging.

Specifically, when the WUS indicates that the terminal device needs to receive the paging, if the first paging is newly sent paging, the terminal device receives the first paging, or if the first paging is repeatedly sent paging, and the terminal device has not received the paging before the first paging, the terminal device receives the first paging, or if the type of the first paging is the paging repetition, and the terminal device has received the paging before the first paging, the terminal device does not receive the first paging.

It should be understood that, that the terminal device has not received the paging includes but is not limited to: The terminal device has not received the paging within specific duration (for example, N paging cycles) before the first paging and/or in a currently camped serving cell, or the terminal device has not received paging the same as the first paging before the first paging.

It should be further understood that, that the terminal device has received the paging includes but is not limited to: The terminal device has received the paging within specific duration (for example, N paging cycles) before the first paging and/or in a currently camped serving cell, or the terminal device has received paging the same as the first paging before the first paging.

It should be noted that, that the terminal device determines, based on the type of the first paging, not to receive the first paging may be alternatively understood as follows: If the first indication information is sent by the network device before the network device sends the paging, the terminal device may determine the type of the first paging based on the first indication information. If the first indication information indicates that the first paging is repeated paging and the terminal device has received the paging before, the terminal device subsequently may not need to listen to, receive, and decode paging information (including the paging DCI and the paging message). If the first indication information is sent by the network device when the network device sends the paging, the terminal device needs to listen to and receive the paging DCI on the PO, and then determine the type of the first paging based on the first indication information, to determine whether to decode the corresponding paging message.

According to the technical solution in this embodiment of this application, the network device indicates whether the paging is newly sent paging or repeatedly sent paging, so that the terminal device can determine the type of the first paging based on the first indication information, determine, with reference to the case of receiving the paging by the terminal device, whether to receive the first paging, and therefore, does not need to receive paging without distinction each time. This can prevent as much as possible an unrelated terminal device from repeatedly obtaining previously received paging information, and reduces additional power consumption caused by unnecessary listening, receiving, and decoding of the paging message.

It should be understood that the implementations of this embodiment of this application may be implemented separately or in combination. This is not limited in this embodiment of this application.

For example, in this embodiment of this application, an implementation in which the network device uses different values of the bit field as the first indication information and an implementation in which the network device sends the same character or value as the first indication information for the group of same paging may be implemented separately or in combination.

It should be understood that specific examples in this embodiment of this application are merely intended to help a person skilled in the art better understand embodiments of this application, but are not intended to limit the scope of embodiments of this application.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

FIG. 5 is a schematic diagram of an example of a paging method according to this application.

For ease of understanding the solution, some concepts in this embodiment of this application are first briefly described.

Camping (camping): That a terminal device camps on a cell means that the terminal device has completed a cell selection/reselection process and has selected the cell, and in the cell, the terminal device listens to system information (System Information, SI), and listens paging (paging) information (in most cases).

Visit (visit): That the terminal device has visited a cell means that the UE has camped on or accessed the cell.

The method includes the following steps.

S510: The terminal device determines first information. The first information includes cell identification information of one or more cells that the terminal device camps on/visits and second information, and the second information is stay probability information of the terminal device in the one or more camped/visited cells.

S520: The terminal device sends the first information to a network device, and the network device receives and stores the first information sent by the terminal device. The first information is used to determine a paging range.

Optionally, the first information further includes stay probability information of the terminal device in the one or more cells within a first time period, or stay probability information of the terminal device in a first cell within a plurality of time periods.

Specifically, that the terminal device sends the first information to the network device includes: The terminal device sends, to a core network device and/or a radio access network device, first information of a cell that the terminal device may camp on/visit. The following separately describes specific sending manners of the terminal device.

It should be noted that, based on different network elements that trigger paging, the paging may be classified into CN paging triggered by a core network (Core Network, CN) and RAN paging triggered by a radio access network (Radio Access Network, RAN). The network may initiate the CN paging for RRC_IDLE UE, and initiate the CN paging or the RAN paging for RRC_INACTIVE UE.

### Manner 1

Optionally, in an embodiment of this application, the terminal device sends, to the core network device CN (for example, an AMF), the first information of the cell that the terminal device may camps on/visits, and the CN receives and stores the first information sent by the terminal device.

Specifically, the CN may determine the paging range based on the first information of the camped/visited cell for the terminal device.

Alternatively, the CN may send the first information of the camped/visited cell for the terminal device to a last serving base station last serving gNB for the terminal device, and the last serving base station last serving gNB determines the paging range based on the first information of the camped/visited cell for the terminal device.

Specifically, when sending data (data) of the terminal device to the last serving base station last serving gNB for the terminal device, the CN may further add, to the data, the information of the camped/visited cell for the terminal device, and the last serving base station last serving gNB determines the paging range based on the first information of the camped/visited cell for the terminal device.

### Manner 2

Optionally, in an embodiment of this application, the terminal device sends the first information of the camped/visited cell to the CN (for example, an AMF) and the RAN (for example, a gNB), and the CN and the RAN receive and store the first information of the camped/visited cell sent by the terminal device.

Specifically, the CN may determine the paging range by using the first information of the camped/visited cell for the terminal device, and the RAN may determine the paging range by using the first information of the camped/visited cell for the terminal device.

It should be noted that the first information of the camped or visited cell sent by the terminal device includes but is not limited to the cell identification information, the stay probability information of the terminal device in the cell, specific time information, and the like.

The cell identifier information may include but is not limited to a physical cell identifier (Physical Cell Identifier, PCI) of the cell, a cell global identifier (Cell Global Identifier, CGI) of the cell, and a public land mobile network (Public Land Mobile Network, PLMN) to which the cell belongs.

Optionally, the stay probability information may be a specific probability value (for example, a stay probability is 0.2 or 20%), or may be a probability level (for example, a stay probability is high, medium, or low), or may be in another form.

It should be noted that, in this embodiment of this application, the stay probability may be obtained by the terminal device through statistics collection based on a historical case of the terminal device, or may be obtained by the network device through statistics collection based on information about the camped or visited cell sent by the terminal device. For example, the terminal device collects statistics on a quantity of times of camping on/visiting a cell (within a period of time), to obtain a stay probability, or the terminal device collects statistics on duration of camping on/visiting a cell, to obtain a stay probability.

Specifically, for example, it is assumed that, within one day, UE 1 camps on/visits only a cell A, a cell B, and a cell C, where the UE 1 camps on/visits the cell A for three times, with duration of 8 hours, the UE 1 camps on/visits the cell B for five times, with duration of 12 hours, and the UE 1 camps on/visits the cell C for seven times, with duration of 4 hours. In this case, stay probabilities of the UE 1 in the cell A, the cell B, and the cell C being respectively 1/5 (low), 1/3 (medium), and 7/15 (high) are obtained through statistics collection based on the quantities of the camping on/visiting times. Stay probabilities of the UE 1 in the cell A, the cell B, and the cell C being 1/3 (medium), 1/2 (high), and 1/6 (low) are obtained through statistics collection based on the camping on/visiting duration.

It should be noted that, in this embodiment of this application, a calculation rule of the stay probability may be configured in a network or may be specified in a protocol. For example, a network-configured/protocol-specified parameter/threshold is used to determine the stay probability level.

Specifically, for example, duration, a quantity of times, a specific moment, an earliest/latest access/camping moment, and the like of camping on/visiting the cell by the terminal device may be used as parameters, and a value obtained by quantizing a plurality of statistical results is used as the threshold to determine the stay probability information of the terminal device. For example, through configuration in the network or stipulation in the protocol, one or more cells that the terminal device camps on/visits and camps on/visits, with duration exceeding 15 hours, within specified duration (for example, 24 hours) and/or that the terminal device camps on/visits for more than six times within a specified camping or access frequency (for example, 10 times) are determined to have a higher stay probability, and may be used as the paging range of the terminal device. The duration of 15 hours and the frequency of 6 times may be specified thresholds.

Further, in this embodiment of this application, a paging range of a target terminal device may be better determined or optimized with reference to the specific time information, for example, information about a camped/visited cell for the terminal device within each time period, or stay probability information of the terminal device with each time period for each cell.

Specifically, the terminal device sends a camped cell within a time period 1 and optionally stay probability information in each cell, a camped cell within a time period 2 and optionally stay probability information in each cell, and the like. For example, the UE 1 sends that the camped cells within the time period 1 are the cell A, the cell B, and the cell C, and stay probability information in the cells is respectively 20%, 30%, and 50%; and the UE 1 sends that the camped cells within the time period 2 are the cell A and a cell D, and the stay probability information in the cells is respectively 40% and 60%.

Alternatively, the terminal device sends stay probability information in a cell 1 within each time period, stay probability information in a cell 2 within each time period, and the like. For example, the UE 1 sends that the stay probability information in the cell 1 within the time periods is respectively 60% (for example, 8:00-20:00), 25% (for example, 20:00-24:00), and 15% (for example, 0:00-8:00), and the UE 1 sends that the stay probability information in the cell 2 within the time periods is respectively 40% (for example, 8:00-20:00), 30% (for example, 20:00-24:00), and 20% (for example, 0:00-8:00). The network device is assisted, by using the information about the camped/visited cell sent by the UE, in determining or optimizing a paging range of target UE.

It should be noted that the first information sent by the terminal device is not necessarily for all cells, and may be determined by the terminal device (for example, only information about a cell in which the terminal stays with a high probability), or may be specified in the network/protocol. For example, the terminal device sends only information about a cell that meets a specific condition (for example, the network/protocol specifies that a cell whose stay probability exceeds a specific threshold needs to be reported). The foregoing is merely used as an example for description, and is not intended for limitation.

S530: The network device determines the paging range of the terminal device based on the first information.

### For Manner 1

Specifically, the CN may determine the paging range based on the first information of the camped/visited cell for the terminal device.

Alternatively, the CN may send the first information of the camped/visited cell for the terminal device to the last serving base station last serving gNB for the terminal device, and the last serving base station last serving gNB determines the paging range based on the first information of the camped/visited cell for the terminal device.

Specifically, when sending the data (data) of the terminal device to the last serving base station last serving gNB for the terminal device, the CN may further add, to the data, the first information of the camped/visited cell for the terminal device, and the last serving base station last serving gNB determines the paging range based on the first information of the camped/visited cell for the terminal device.

### For Manner 2

Specifically, the CN may determine the paging range by using the first information of the camped/visited cell for the terminal device, and the RAN may determine the paging range by using the first information of the camped/visited cell for the terminal device.

It should be noted that the network device sends paging to the terminal device based on the paging range, and the terminal device receives the paging sent by the network device. The paging is used to page the terminal device. For example, a manner in which the network device determines the paging range of the terminal device may be: selecting, as the paging range of the terminal device, one or more cells in which the terminal device stays with a higher probability within a current time period, and sending the paging within the paging range.

It should be understood that the implementations of this embodiment of this application may be implemented separately or in combination. This is not limited in this embodiment of this application.

For example, in this embodiment of this application, that the terminal device sends the cell identification information, the stay probability information of the terminal device in the cell, and the specific time information that are in the information of the camped or visited cell for the terminal device may be implemented separately or in combination. To be specific, a manner in which the network device determines the paging range of the target terminal device may be: determining the paging range of the target terminal device based on the cell identification information in the information of the camped or visited cell sent by the terminal device, or a manner in which the network device determines the paging range of the target terminal device may be: selecting, as the paging range of the terminal device, the one or more cells in which the terminal device stays with the higher probability, or the manner in which the network device determines the paging range may be: selecting, as the paging range, the one or more cells in which the terminal device stays with the higher probability within the current time period, or the like.

According to the technical solution in this embodiment of this application, the terminal device sends the information of the camped or visited cell for the terminal device, so that the network device can further determine or optimize the paging range. This ensures a paging success probability of the paged terminal device, and reduces impact on an unrelated terminal device in an unrelated area. In other words, when needing to initiate the paging for the terminal device, the network device can determine a cell in which the terminal device may stay or may stay with a high probability (currently). Therefore, the paging can be preferably initiated in one or more cells in which the terminal device may stay or may stay with a higher probability, to reduce a paging false alarms in a system.

It should be understood that the implementations of this embodiment of this application may be implemented separately or in combination. This is not limited in this embodiment of this application.

It should be understood that specific examples in this embodiment of this application are merely intended to help a person skilled in the art better understand embodiments of this application, but are not intended to limit the scope of embodiments of this application.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

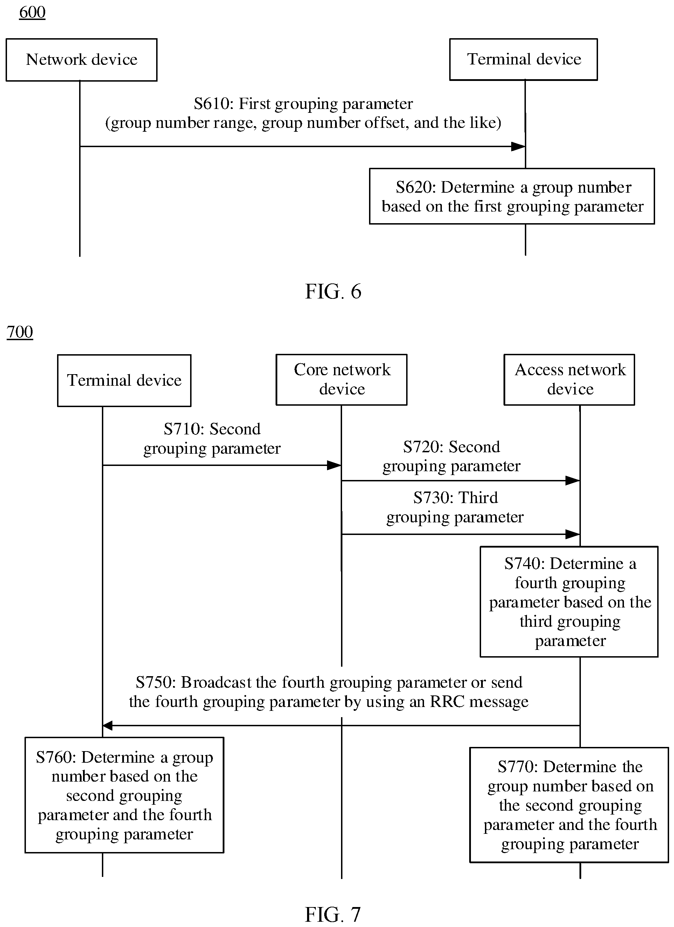

FIG. 6 is a schematic diagram of an example of a paging method according to this application. The method includes the following steps.

S610: A network device sends a first grouping parameter to a terminal device, and the terminal device receives the first grouping parameter sent by the network device. The first grouping parameter is used by the terminal device to determine a group number, and the group number is used by the network device to send paging.

It should be noted that the first grouping parameter includes a group number range or a group number offset. The group number range includes a first group number range and/or a second group number range. The first group number range is a group number range of a radio resource control idle RRC_IDLE terminal device, and the first group number range is a group number range of a radio resource control inactive RRC_INACTIVE terminal device. The group number offset includes a first group number offset and/or a second group number offset. The first group number offset is a group number offset of the radio resource control idle RRC_IDLE terminal device, and the second group number offset is a group number offset of the radio resource control inactive RRC_INACTIVE terminal device.

The network device obtains through division group number ranges used by idle UE and inactive UE, or configures a group number offset for idle UE or inactive UE, to add the idle UE and the inactive UE to different UE groups, that is, ensures that the idle UE and the inactive UE are not in a same group.

It should be noted that the network device does not send RAN paging but may send only CN paging to the idle UE, but the network device may send RAN paging or CN paging to the inactive UE.

The following separately describes, in three specific manners, how the first grouping parameter is received and sent between the network device and the terminal device.

Optionally, the network device broadcasts the first grouping parameter, or the network device sends the first grouping parameter by using a radio resource control RRC message.

Optionally, the terminal device receives the first grouping parameter from a broadcast message, or the terminal device receives the first grouping parameter from the radio resource control RRC message.

It should be noted that the radio resource control RRC message may be an RRC release message.

### Manner 1

Optionally, the network device broadcasts the first group number range of the radio resource control idle RRC_IDLE terminal device and/or the second group number range of the radio resource control inactive RRC_INACTIVE terminal device. For example, it is assumed that a total quantity of groups broadcast by the network device is N. If a group number range of the idle UE is 0 to M, a first group number range of the inactive UE is M+1 to N. In this case, the network device sends a first group number range 0 to M for the idle UE to the terminal device, and sends the second group number range M+1 to N for the inactive UE to the terminal device.

Optionally, the terminal device receives, from the broadcast message, the first group number range of the radio resource control idle RRC_IDLE terminal device and/or the second group number range of the radio resource control inactive RRC_INACTIVE terminal device. For example, correspondingly, the terminal device receives the first group number range 0 to M for the idle UE sent by the network device, and receives the second group number range M+1 to N-1 for the inactive UE.

### Manner 2

Optionally, the network device broadcasts the first group number offset (offset) of the radio resource control idle RRC_IDLE terminal device and/or the second group number offset (offset) of the radio resource control inactive RRC_INACTIVE terminal device. For example, it is assumed that a group number offset that is of the idle UE or the inactive UE and that is broadcast by the network device is W. In this case, the network device sends a first group number offset W for the idle UE to the terminal device, or sends a second group number offset W for the inactive UE to the terminal device.

Optionally, the terminal device receives, from the broadcast message, the first group number offset of the radio resource control idle RRC_IDLE terminal device and/or the second group number offset of the radio resource control inactive RRC_INACTIVE terminal device. For example, correspondingly, the terminal device receives the first group number offset W for the idle UE sent by the network device, or receives the second group number offset W for the inactive UE.

It should be noted that the group number offset W may be for only UE in one RRC status. For example, if the sent first group number offset is for the idle UE, a group number of the inactive UE does not need to be offset, to ensure that the RRC_IDLE UE and the RRC_INACTIVE UE are distributed in different groups as much as possible.

### Manner 3

Optionally, for the radio resource control inactive RRC_INACTIVE UE, the network device may configure and send, in the radio resource control RRC message, a first grouping parameter of the inactive UE, a second group number range of the inactive UE, a second group number offset, or the like. For example, it is assumed that a total quantity of groups broadcast by the network device is N. If the second group number range of the inactive UE is obtained through division and is M+1 to N-1, the second group number range for the inactive UE sent by the network device to the terminal device is M+1 to N-1. Alternatively, it is assumed that the second group number offset of the inactive UE broadcast by the network device is W. In this case, the second group number offset for the inactive UE sent by the network device to the terminal device is W.

Optionally, the terminal device receives the second group number range or the second group number offset of the radio resource control inactive RRC_INACTIVE terminal device from the radio resource control RRC message. For example, correspondingly, the second group number range for the inactive UE sent by the network device and received by the terminal device is M+1 to N-1, or the terminal device receives the second group number offset W for the inactive UE sent by the network device.

S620: The terminal device determines the group number based on the first grouping parameter. The group number is used by the network device to send the paging.

Optionally, the radio resource control idle RRC_IDLE terminal device determines the group number based on the first group number range or the first group number offset, or the radio resource control inactive RRC_INACTIVE terminal device determines the group number based on the second group number range or the second group number offset.

Specifically, the first grouping parameter includes the group number range or the group number offset. The RRC_IDLE UE determines, based on the first group number range and/or the group number offset, a group number that is of the idle UE and that is used for paging. Alternatively, the RRC_INACTIVE UE determines, based on the second group number range or the group number offset, the group number that is of the inactive UE and that is used for paging.

The following separately describes specific manners in which the terminal device determines the group number based on the first grouping parameter.

### For Manner 1

Optionally, the terminal device determines that the group number of the terminal device falls within a group number range indicated by the network. For example, if the group number range of the idle UE is 0 to M, a group number finally used by the idle UE needs to fall within a range of 0 to M. In this case, the group number range of the inactive UE is M+1 to N-1, and a group number finally used by the inactive UE needs to fall within a range of M+1 to N-1.

In a possible implementation, in a manner of grouping based on UE identification information, it is assumed that a quantity of UE groups broadcast by the network device is N, and a UE identifier is a UE_ID. In this case, the idle UE finally uses the group number group ID=(UE_ID mod L) mod (M+1), and the inactive UE finally uses the group number group ID=(UE_ID mod L) mod [N-(M+1)]+(M+1). Herein, a formula for calculating the group number of the idle UE and the group number of the inactive UE is not limited, so long as it can be ensured that the idle UE and the inactive UE are in the different groups.

It should be noted that the UE_ID is agreed on by the network device and user equipment, and the UE_ID is configured by the network device, or has been configured by user equipment before delivery. The UE_ID may be an IMSI (International Mobile Subscriber Identity), an S-TMSI (SAE Temporary Mobile Station Identifier) allocated by an MME, or a 5G-S-TMSI (SAE Temporary Mobile Station Identifier) allocated by an AMF.

Specifically, for example, it is assumed that the quantity of UE groups broadcast by the network is 10, a quantity of pieces of idle UE and a quantity of pieces of inactive UE are respectively 50, and UE_IDs of the idle UE and the inactive UE are respectively 0 to 49 and 50 to 99. In this case, if the group number range of the idle UE is 0 to 3, the group number finally used by the idle UE needs to fall within a range of 0 to 3, and if the group number range of the inactive UE is 4 to 9, the group number finally used by the inactive UE needs to fall within a range of 4 to 9. For example, when the UE_ID of the idle UE is 5, a group number group ID=(5 mod 10) mod 3=2 is finally used, that is, a group number of the idle UE whose UE_ID is 5 is 2. For another example, when the UE_ID of the idle UE is 39, a group number group ID=(39 mod 10) mod 3=0 is finally used, that is, a group number of the idle UE whose UE_ID is 39 is 0. Alternatively, for example, when the UE_ID of the inactive UE is 66, a group number group ID=(66 mod 10) mod 5+4=5 is finally used, that is, a group number of the inactive UE whose UE_ID is 66 is 5. For another example, when the UE_ID of the inactive UE is 78, a group number group ID=(78 mod 10) mod 5+4=7 is finally used, that is, a group number of the inactive UE whose UE_ID is 78 is 7. Calculation of a group number of another piece of UE is not described herein again.

Alternatively, in another possible implementation, in a manner of grouping based on a probability that UE is to be paged, it is assumed that a quantity of UE groups broadcast by the network device is L, and the probability that the UE is to be paged is P. In this case, the idle UE finally uses a group number group ID=(P mod L) mod M, and the inactive UE finally uses a group number group ID=(P mod L) mod [N-(M+1)]+(M+1). Herein, a formula for calculating the group number of the idle UE and the group number of the inactive UE is not limited, so long as it can be ensured that the idle UE and the inactive UE are in the different groups.

Specifically, for example, it is assumed that the quantity of UE groups broadcast by the network is 10, a quantity of pieces of idle UE and a quantity of pieces of inactive UE are respectively 50, and probabilities P that the idle UE and the inactive UE are to be paged are respectively 0% to 49% and 50% to 99%. In this case, if the group number range of the idle UE is 0 to 3, the group number finally used by the idle UE needs to fall within a range of 0 to 3, and if the group number range of the inactive UE is 4 to 9, the group number finally used by the inactive UE needs to fall within a range of 4 to 9. For example, when the probability that the idle UE is to be paged is 4%, a group number group ID=(4 mod 10) mod 3=1 is finally used, that is, a group number of the idle UE whose probability of being to be paged is 4% is 1. For another example, when the probability that the idle UE is to be paged is 48%, a group number group ID=(48 mod 10) mod 3=2 is finally used, that is, a group number of the idle UE whose probability of being to be paged is 48% is 2. Alternatively, for example, when the probability that the inactive UE is to be paged is 53%, a group number group ID=(53 mod 10) mod 5+4=7 is finally used, that is, a group number of the inactive UE whose probability of being to be paged is 53% is 7. For another example, when the probability that the inactive UE is to be paged is 75%, a group number group ID=(75 mod 10) mod 5+4=4 is finally used, that is, a group number of the inactive UE whose probability of being to be paged is 75% is 4. Calculation of a group number of another piece of UE is not described herein again.

Alternatively, in another possible implementation, it is assumed that a total quantity of groups is L. In this case, the network device broadcasts a correspondence between a group and a paging probability. For example, a group 0 corresponds to a paging probability 0 to 20%, and a group 2 corresponds to a paging probability 21% to 40%.

### For Manner 2

Optionally, the terminal device determines the group number of the terminal device by using the group number offset. For example, if the group number offset of the idle UE is W, when calculating a finally used group number, the UE needs to use the group number offset.

In a possible implementation, in a manner of grouping based on UE identification information, it is assumed that a quantity of UE groups broadcast by the network is L, and a UE identifier is a UE_ID. In this case, the idle UE finally uses a group number group ID=(UE_ID mod L)±/×W, and the inactive UE finally uses a group number group ID=(UE_ID mod L). Herein, a formula for calculating the group number of the idle UE and the group number of the inactive UE is not limited, so long as it can be ensured that the idle UE and the inactive UE are in the different groups.

In other words, it is assumed that the quantity of UE groups broadcast by the network is L. In this case, in the manner of grouping based on the UE identification information, the idle UE and the inactive UE definitely belong to a group number range of 0 to L-1. When the group number offset of the idle UE is W, the group number of the idle UE does not fall within the group number range of 0 to L-1. A value of W is greater than or equal to L. However, the group number of the inactive UE is not offset. In this case, the inactive UE completely falls within the group number range of 0 to L-1. In this case, it can be ensured that the idle UE and the inactive UE are in the different groups.

Specifically, for example, it is assumed that the quantity of UE groups broadcast by the network is 10, a quantity of pieces of idle UE and a quantity of pieces of inactive UE are respectively 50, and UE_IDs of the idle UE and the inactive UE are respectively 0 to 49 and 50 to 99. For example, in the manner of grouping based on the UE identification information, the idle UE and inactive UE are evenly distributed to the 10 groups. The group number offset of the idle UE is set to 11, and "+" is selected for a manner of calculating the group number offset. In this case, the UE needs to use the group number offset to calculate the finally used group number. When the UE_ID of the idle UE is 5, a group number group ID=(5 mod 10)+ 11=16 is finally used, that is, a group number of the idle UE whose UE_ID is 5 is 16. For another example, when the UE_ID of the idle UE is 27, a group number group ID=(27 mod 10)+11=18 is finally used, that is, a group number of the idle UE whose UE_ID is 27 is 18. For still another example, when the UE_ID of the idle UE is 39, a group number group ID=(39 mod 10)+11=20 is finally used, that is, a group number of the idle UE whose UE_ID is 39 is 20. In this case, a group range to which the inactive UE belongs is 0 to 9, and a group range to which the idle UE belongs is 11 to 20. Calculation of a group number of another piece of UE is not described herein again.

Alternatively, in another possible implementation, in a manner of grouping based on a probability that UE is to be paged, it is assumed that a quantity of UE groups broadcast by the network is L, and the probability that the UE is to be paged is P. In this case, the idle UE finally uses a group number group ID=(P mod L)±/×W, and the inactive UE finally uses a group number group ID=(P mod L). Herein, a formula for calculating the group number of the idle UE and the group number of the inactive UE is not limited, and a method for calculating an offset is not limited either, so long as it can be ensured that the idle UE and the inactive UE are in the different groups.

In other words, it is assumed that the quantity of UE groups broadcast by the network is L. In this case, in the manner of grouping based on the probability that the UE is to be paged, the idle UE and the inactive UE definitely belong to a group number range of 0 to L-1. When the group number offset of the idle UE is W, the group number of the idle UE does not fall within the group number range of 0 to L-1. A value of W is greater than L as much as possible. However, the group number of the inactive UE is not offset. In this case, the inactive UE completely falls within the group number range of 0 to L-1. In this case, it can be ensured that the idle UE and the inactive UE are in the different groups.

Specifically, for example, it is assumed that the quantity of UE groups broadcast by the network is 10, a quantity of pieces of idle UE and a quantity of pieces of inactive UE are respectively 50, and probabilities that the idle UE and the inactive UE are to be paged are respectively 0% to 49% and 50% to 99%. For example, in the manner of grouping based on the probability that the UE is to be paged, the idle UE and inactive UE are unevenly and randomly distributed to the 10 groups. The group number offset of the idle UE is set to 10, and "-" is selected for a manner of calculating the group number offset. In this case, the UE needs to use the group number offset to calculate the finally used group number. When the probability that the idle UE is to be paged is 15%, a group number group ID=(11 mod 10)-10=-9 is finally used, that is, a group number of the idle UE whose probability of being to be paged is 25% is - 9. For another example, when the probability that the idle UE is to be paged is 21%, a group number group ID=(21 mod 10)-5=-4 is finally used, that is, a group number of the idle UE whose probability of being to be paged is 21% is -4. For still another example, when the probability that the idle UE is to be paged is 39%, a group number group ID=(39 mod 10)-10=-1 is finally used, that is, a group number of the idle UE whose probability of being to be paged is 39% is -1. In this case, a group range to which the inactive UE belongs is 0 to 9, and a group range to which the idle UE belongs is -10 to -1. Calculation of a group number of another piece of UE is not described herein again.

Optionally, the UE determines a group number of the UE by using a group number offset. For example, if the group number offset of the inactive UE is W, when calculating the finally used group number, the UE needs to use the group number offset. A specific method for calculating the group number is the same as the foregoing content, and details are not described herein again.

### For Manner 3

Particularly, for the RRC_INACTIVE UE, the network device may configure a first grouping parameter of the inactive UE in the RRC message. For example, in a manner of grouping based on UE identification information, the terminal device determines that the group number of the terminal device falls within a group number range indicated by the network, or in a manner of grouping based on a probability that UE is to be paged, the terminal device determines the group number of the terminal device by using the group number offset. A specific implementation is the same as corresponding methods in Manner 1 and Manner 2, and details are not described herein again.

It should be noted that the network device sends the paging to the terminal device based on the group number.

Optionally, the network device sends the group number of the RRC_IDLE UE and the group number of the RRC_INACTIVE UE before sending the paging or when sending the paging. For example, if paging information with the group number is sent before a paging occasion PO, an unrelated terminal device may not receive and decode a paging message, or if the paging information with the group number is sent on a paging occasion PO, an unrelated terminal device needs to receive a paging message, but may not decode the paging message. The solution in this embodiment of this application can avoid additional power consumption of unrelated UE caused by unnecessary paging reception.

Specifically, after the RRC_IDLE UE and the RRC_INACTIVE UE are grouped, when the network device needs to initiate paging, for the group number of the idle UE and the group number of the inactive UE, the network device may directly send the paging to a group number in which a target terminal device is located. For example, it is assumed that the network device needs to page UE 1 and UE 2, the UE 1 determines, based on the first grouping parameter, that a group number in which the UE 1 is located is a fifth group, and the UE 2 determines, based on the first grouping parameter, that a group number in which the UE 2 is located is an eighth group. In this case, the network device needs to send paging information (including paging DCI and a paging message) only to the fifth group and the eighth group. A terminal device in the fifth group and a terminal device in the eighth group further determine a paging type according to the solution provided in this application, and further determines, with reference to a case of receiving paging previously, whether to receive the paging message. A terminal device in another group number does not need to listen to, receive, and decode the paging information. In this way, a success probability of paging the target UE 1 and UE 2 is increased, power consumption of sending the paging by the network device is reduced, and the unrelated terminal device is prevented as much as possible from receiving an unnecessary paging message without distinction, to reduce a paging false alarm.

According to the technical solution in this embodiment of this application, the network device sends the first grouping parameter to the terminal device, terminal devices in different RRC statuses correspond to different grouping parameters, and the first grouping parameter is used to determine the group number of the terminal device, so that the RRC_IDLE UE and RRC_INACTIVE UE can separately calculate the group number of the RRC_IDLE UE and the group number of the RRC_INACTIVE UE based on the corresponding first group number range and second group number range in the first grouping parameter. In this way, the idle UE and the inactive UE can be added to the different groups, and the idle UE can be prevented from frequently performing unnecessary reception of the RAN paging and generating unnecessary power consumption when the network device frequently initiates the RAN paging for the inactive UE.

It should be noted that, in practice, a probability that the network device initiates the paging for the inactive UE may be higher than a probability that the network device initiates the paging for the idle UE. The idle UE and the inactive UE are added to the different groups, to prevent, when the network device frequently pages the inactive UE, the idle UE from frequently performing unnecessary paging reception.

It should be understood that the implementations of this embodiment of this application may be implemented separately or in combination. This is not limited in this embodiment of this application.

It should be understood that specific examples in this embodiment of this application are merely intended to help a person skilled in the art better understand embodiments of this application, but are not intended to limit the scope of embodiments of this application.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

Similar to the paging method shown in FIG. 6, specifically, FIG. 7 is a schematic diagram of another example of a paging method according to this application. As shown in FIG. 7, a network device and a terminal device determine a second grouping parameter through negotiation. The network device determines the second grouping parameter, namely, information related to grouping of the terminal devices, and the terminal device determines a group number based on the first grouping parameter. Specifically, implementation steps of determining the group number are as follows.

S710: The terminal device sends the second grouping parameter to a core network device, and the core network device receives the second grouping parameter sent by the terminal device. The second grouping parameter is used to determine the group number of the terminal device.

It should be understood that the second grouping parameter may be but is not limited to a parameter related to a service of the terminal device, for example, a service requirement level of the terminal device. For example, there are currently a high service requirement level, a medium service requirement level, and a low service requirement level. A terminal device UE 1 determines, as the high level, a service requirement level expected by the terminal device UE 1, and sends the second grouping parameter to the core network device. The core network device receives that the service level corresponding to the terminal device UE 1 is the high level.

Specifically, the terminal device may determine the second grouping parameter based on any one or more of the following content, namely, the information related to grouping of the terminal devices, including: a quality of service (Quality of Service, QoS) parameter of the service of the terminal device, for example, a packet delay budget (Packet Delay Budget, PDB), a packet error rate (Packet Error Rate, PER), or a priority level (Default Priority Level), and/or a service type of the terminal device, for example, an enhanced mobile broadband (enhanced Mobile Broadband, eMBB) service, an ultra-reliable and low-latency paging (Ultra-Reliable and Low-Latency Communication, URLLC) service, or a massive machine type paging (massive Machine Type Communication, mMTC) service, and/or a mobility state (mobility state) or a moving speed of the terminal device.

Specifically, the terminal device sends, to the core network device, grouping-related information expected by the terminal device, and the core network device accepts the grouping-related information expected by the terminal device. For example, the second grouping parameter is the service requirement level of the terminal device. It is assumed that there are currently the high service requirement level, the medium service requirement level, and the low service requirement level. The terminal device UE 1 determines, as the high level, the service requirement level expected by the terminal device UE 1, and sends the service requirement level to the network device. When receiving the second grouping parameter, the network device receives and agrees with the second grouping parameter expected by the terminal device, so that the network device and the terminal device reach a consensus. The second grouping parameter is used to determine the group of the terminal device.

Optionally, after the terminal device sends, to the network device, the second grouping parameter expected by the terminal device, the network device may alternatively reject the second grouping parameter, and then send feedback information to the terminal device. After receiving the feedback information, the terminal device adjusts the service requirement level, and resends the second grouping parameter, or
the terminal may not continue to send the second grouping parameter.

S720: The core network device sends the second grouping parameter to an access network device, and the access network device receives the second grouping parameter sent by the core network device. The second grouping parameter is used to determine the group number of the terminal device.

Specifically, when sending paging to the terminal device, the access network device determines the group number of the terminal device based on the second grouping parameter and a fourth grouping parameter, and then sends the paging based on the group number. It is assumed that the access network device needs to page the terminal device UE 1, and a group number of the UE 1 is a group 1. In this case, the access network device only needs to send paging to the group 1 in which the terminal device UE 1 is located.

S730: The core network device determines and sends a third grouping parameter to the access network device, and the access network device receives the third grouping parameter sent by the core network device. The third grouping parameter is used to determine the fourth grouping parameter.

Optionally, the third grouping parameter, namely, the information related to grouping of the terminal devices, may be but is not limited to the parameter related to the service of the terminal device, for example, all possible service requirement levels when information related to grouping of UE is the service requirement level. For example, there are currently the high service requirement level, the medium service requirement level, and the low service requirement level, and the core network device correspondingly divides the three service requirement levels into three groups.

It should be noted that the second grouping parameter is for a service requirement level corresponding to a specific terminal device. For example, service requirement levels of the UE 1 and UE 2 are respectively the high level and the low level. When the information related to grouping of the UE is the service requirement level, the third grouping parameter is group-related information obtained by the core network device by performing level classification on service requirements of all terminal devices that are within a management range. For example, the network device classifies service requirement levels of all the terminal devices into the high level, the medium level, and the low level, and sends the classification rule and the division result to a base station as the third grouping parameter, so that the base station determines the fourth grouping parameter based on the third grouping parameter. The fourth grouping parameter includes a group number or a group number range of a terminal device corresponding to each service requirement level.

Specifically, when initiating the paging for the terminal device, the core network device sends, to the base station, the information that is related to grouping of the terminal devices and that is specific to the terminal device. For example, when the information related to grouping of the terminal devices is the service requirement level, the core network device may notify the base station of all the possible service requirement levels. It is assumed that the network device classifies the service requirement levels of all the terminal devices into the high level, the medium level, and the low level, and correspondingly divides the service requirement levels into the three groups. The classification rule and the division result are sent to the base station as the third grouping parameter, so that the base station determines the fourth grouping parameter based on the third grouping parameter.

It should be noted that the terminal device may also send the second grouping information to the radio access network device.

S740: The access network device determines the fourth grouping parameter based on the third grouping parameter.

Specifically, the fourth grouping parameter includes but is not limited to the group number range and/or the group number used by the terminal device corresponding to each service requirement level. For example, based on the fact that the received service levels of the terminal devices are the high level, the medium level, and the low level, the access network device may correspondingly add the received service levels to group numbers, namely, a group A, a group B, and a group C, or the access network device correspondingly sets, to groups 0 to 2, groups 3 to 4, and groups 5 to 7 respectively, group number ranges to which high-level, medium-level, and low-level terminal devices belong.

S750: The access network device broadcasts the fourth grouping parameter to the terminal device, or the access network device sends the fourth grouping parameter to the terminal device by using an RRC message, and the terminal device receives, from a broadcast message or the radio resource control RRC message, the fourth grouping parameter sent by the access network device. The fourth grouping parameter is used to determine the group number of the terminal device.

Specifically, for example, when the third grouping parameter is the service requirement level of the terminal device, the access network device may send a group number or a group number range corresponding to each service requirement level, and the terminal device receives the group number or the group number range corresponding to each service requirement level. It is assumed that the network device classifies the service requirement levels of all the terminal devices into the high level, the medium level, and the low level, and correspondingly divides the service requirement levels into six groups, and group number ranges are respectively groups 0 to 2, groups 3 to 4, and a group 5. In this case, the radio access network device may send the rule to the terminal device.

S760: The terminal device determines the group number based on the fourth grouping parameter and the second grouping parameter. The group number is used by the network device to send the paging.

Specifically, the terminal device receives the group number or the group number range corresponding to each service requirement level sent by the network device, and the terminal device receives the group number or the group number range corresponding to each service requirement level. It is assumed that the network device classifies the service requirement levels of all the terminal devices into the high level, the medium level, and the low level, and correspondingly divides the service requirement levels into the six groups, and the group number ranges are respectively the groups 0 to 2, the groups 3 to 4, and the group 5. In this case, after receiving the grouping rule that is related to the service requirement level and that is sent by the radio access network device, the terminal device determines the service requirement level of the terminal device based on the second grouping parameter, and further determines the group number to which the terminal device belongs.

S770: The access network device determines the group number based on the fourth grouping parameter and the second grouping parameter. The group number is used by the network device to send the paging.

Optionally, the core network sends, to the access network device (when initiating the paging for the terminal device), the information that is related to grouping of the terminal devices and that is specific to the terminal device, or the terminal device sends, to the base station, the information that is related to grouping of the terminal devices and that is specific to the terminal device. For example, when the information related to grouping of the terminal devices is the service requirement level, the core network sends the service requirement level of the terminal device to the access network device (when initiating the paging for the terminal device), or the terminal device sends the service requirement level of the terminal device to the access network device. When sending paging for a terminal device, the base station determines a group of the terminal device based on information that is related to grouping of the terminal devices and that is specific to the terminal device, and pages the terminal device.

According to the technical solution in this embodiment of this application, the terminal device and the core network device negotiate, based on a feature of the terminal device, the information related to grouping of the terminal devices, so that terminal devices with same or similar features can be added to a same group. The terminal devices are grouped based on service features of the terminal devices, so that terminal devices with same/similar service types or service requirements can be added to a same group, to ensure as much as possible that terminal devices paged this time belong to a same group. This decreases a probability that an unrelated terminal device is paged. The terminal devices are grouped based on a mobility feature, so that terminal devices with same or similar mobility states or speeds can be added to a same group, to prevent, when the network pages a terminal device with high mobility or a high speed, as much as possible a terminal device with low mobility or a low speed from generating unnecessary paging.

It should be understood that specific examples in this embodiment of this application are merely intended to help a person skilled in the art better understand embodiments of this application, but are not intended to limit the scope of embodiments of this application.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

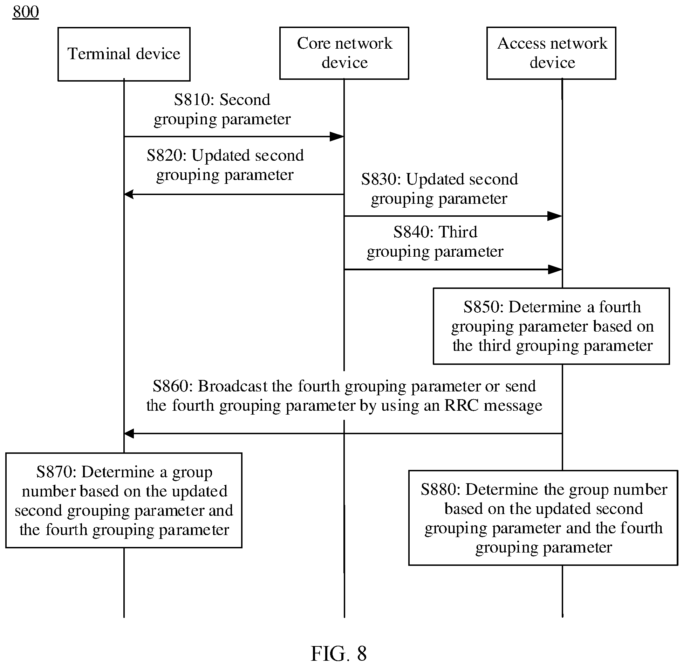

Similar to FIG. 7, FIG. 8 is a schematic diagram of another example of a paging method according to this application. Specifically, implementation steps of determining a group number are as follows.

S810: A terminal device sends a second grouping parameter to a core network device, and the core network device receives the second grouping parameter sent by the terminal device. The second grouping parameter is used to determine a group number of the terminal device.

It should be understood that the second grouping parameter may be but is not limited to a parameter related to a service of the terminal device, for example, a service requirement level of the terminal device. For example, there are currently a high service requirement level, a medium service requirement level, and a low service requirement level. A terminal device UE 1 determines, as the high level, a service requirement level expected by the terminal device UE 1.

Specifically, the terminal device may determine the second grouping parameter based on any one or more of the following content, namely, information related to grouping of the terminal devices, including: a quality of service (Quality of Service, QoS) parameter of the service of the terminal device, for example, a packet delay budget (Packet Delay Budget, PDB), a packet error rate (Packet Error Rate, PER), or a priority level (Default Priority Level), and/or a service type of the terminal device, for example, an enhanced mobile broadband (enhanced Mobile Broadband, eMBB) service, an ultra-reliable and low-latency paging (Ultra-Reliable and Low-Latency Communication, URLLC) service, or a massive machine type paging (massive Machine Type of Communication, mMTC) service, and/or a mobility state (mobility state) or a moving speed of the terminal device.

Specifically, the terminal device sends, to the core network device, grouping-related information expected by the terminal device, and the core network device accepts the grouping-related information expected by the terminal device. For example, the second grouping parameter is the service requirement level of the terminal device. It is assumed that there are currently the high service requirement level, the medium service requirement level, and the low service requirement level. The terminal device UE 1 determines, as the high level, the service requirement level expected by the terminal device UE 1, and sends the service requirement level to a network device. The network device receives the expected service requirement level sent by the terminal device UE 1.

S820: The core network device updates the second grouping parameter and sends an updated second grouping parameter to the terminal device, and the terminal device receives the updated second grouping parameter sent by the core network device. The second grouping parameter is used to determine the group number of the terminal device.

It should be understood that the updated second grouping parameter may be but is not limited to the parameter related to the service of the terminal device, for example, the service requirement level of the terminal device. For example, there are currently the high service requirement level, the medium service requirement level, and the low service requirement level. The terminal device UE 1 determines, as the high level, the service requirement level expected by the terminal device UE 1, and sends the service requirement level to the network device. When receiving the second grouping information, the network device considers that the expected second grouping parameter does not actually match a service requirement level of the terminal device UE 1. Therefore, the network device updates the service requirement level of the terminal device UE 1 to the medium level, and notifies the terminal device of the updated second grouping parameter. The second grouping parameter is also used to determine the group of the terminal device.

Specifically, the terminal device may determine the updated second grouping parameter based on any one or more of the following content, namely, the information related to grouping of the terminal devices, including: the quality of service (Quality of Service, QoS) parameter of the service of the terminal device, for example, the packet delay budget (Packet Delay Budget, PDB), the packet error rate (Packet Error Rate, PER), or the priority level (Default Priority Level), and/or the service type of the terminal device, for example, the enhanced mobile broadband (enhanced Mobile Broadband, eMBB) service, the ultra-reliable and low-latency paging (Ultra-Reliable and Low-Latency Communication, URLLC) service, or the massive machine type paging (massive Machine Type of Communication, mMTC) service, and/or the mobility state (mobility state) or the moving speed of the terminal device.

S830: The core network device sends the second grouping parameter to an access network device, and the access network device receives the second grouping parameter sent by the core network device. The second grouping parameter is used to determine the group number of the terminal device.

Specifically, when sending paging to the terminal device, the access network device determines the group number of the terminal device based on the second grouping parameter and a fourth grouping parameter, and then sends the paging based on the group number. It is assumed that the access network device needs to page the terminal device UE 1, and a group number of the UE 1 is a group 1. In this case, the access network device only needs to send paging to the group 1 in which the terminal device UE 1 is located.

S840: The core network device determines and sends a third grouping parameter to the access network device, and the access network device receives the third grouping parameter sent by the core network device. The third grouping parameter is used to determine the fourth grouping parameter.

Optionally, the third grouping parameter, namely, the information related to grouping of the terminal devices, may be but is not limited to the parameter related to the service of the terminal device, for example, all possible service requirement levels when information related to grouping of UE is the service requirement level. For example, there are currently the high service requirement level, the medium service requirement level, and the low service requirement level, and the core network device correspondingly divides the three service requirement levels into three groups.

It should be noted that the second grouping parameter is for a service requirement level corresponding to a specific terminal device. For example, service requirement levels of the UE 1 and UE 2 are respectively the high level and the low level. When the information related to grouping of the UE is the service requirement level, the third grouping parameter is group-related information obtained by the core network device by performing level classification on service requirements of all terminal devices that are within a management range. For example, the network device classifies service requirement levels of all the terminal devices into the high level, the medium level, and the low level, correspondingly divides the service requirement levels into the three groups, and sends the classification rule and the division result to a base station as the third grouping parameter, so that the base station determines the fourth grouping parameter based on the third grouping parameter. The fourth grouping parameter includes a group number range or a group number of a terminal device corresponding to each service requirement level.

Specifically, when initiating the paging for the terminal device, the core network device sends, to the base station, the information that is related to grouping of the terminal devices and that is specific to the terminal device. For example, when the information related to grouping of the terminal devices is the service requirement level, the core network device may notify the base station of all the possible service requirement levels. It is assumed that the network device classifies the service requirement levels of all the terminal devices into the high level, the medium level, and the low level, and correspondingly divides the service requirement levels into the three groups. The classification rule and the division result are sent to the base station as the third grouping parameter, so that the base station determines the fourth grouping parameter based on the third grouping parameter.

It should be noted that the terminal device may also send the second grouping information to the radio access network device.

S850: The access network device determines the fourth grouping parameter based on the third grouping parameter sent by the core network device. The fourth grouping parameter is used to determine the group number of the terminal device.

Specifically, the fourth grouping parameter includes but is not limited to the group number range and/or the group number used by the terminal device corresponding to each service requirement level. For example, based on the fact that the received service levels of the terminal devices are the high level, the medium level, and the low level, the access network device may correspondingly add the received service levels to group numbers, namely, a group A, a group B, and a group C, or the access network device correspondingly sets, to groups 0 to 2, groups 3 to 4, and groups 5 to 7 respectively, group number ranges to which high-level, medium-level, and low-level terminal devices belong.

S860: The access network device broadcasts the fourth grouping parameter to the terminal device, or the access network device sends the fourth grouping parameter to the terminal device by using a radio resource control RRC message, and the terminal device receives, from a broadcast message or the radio resource control RRC message, the fourth grouping parameter sent by the access network device. The fourth grouping parameter is used to determine the group number of the terminal device.

Specifically, for example, when the third grouping parameter is the service requirement level of the terminal device, the access network device may send a group number or a group number range corresponding to each service requirement level, and the terminal device receives the group number or the group number range corresponding to each service requirement level. It is assumed that the network device classifies the service requirement levels of all the terminal devices into the high level, the medium level, and the low level, and correspondingly divides the service requirement levels into six groups, and group number ranges are respectively groups 0 to 2, groups 3 to 4, and a group 5. In this case, the radio access network device may send the rule to the terminal device.

S870: The terminal device determines the group number based on the fourth grouping parameter sent by the access network device and the updated second grouping parameter. The group number is used by the network device to send the paging.

Specifically, the terminal device receives the group number or the group number range corresponding to each service requirement level sent by the network device, and the terminal device receives the group number or the group number range corresponding to each service requirement level. It is assumed that the network device classifies the service requirement levels of all the terminal devices into the high level, the medium level, and the low level, and correspondingly divides the service requirement levels into the six groups, and the group number ranges are respectively the groups 0 to 2, the groups 3 to 4, and the group 5. In this case, after receiving the grouping rule that is related to the service requirement level and that is sent by the radio access network device, the terminal device determines the service requirement level of the terminal device based on the second grouping parameter, and further determines the group number to which the terminal device belongs.

S880: The access network device determines the group number based on the fourth grouping parameter and the updated second grouping parameter. The group number is used by the network device to send the paging.

Optionally, the core network sends, to the access network device (when initiating the paging for the terminal device), the information that is related to grouping of the terminal devices and that is specific to the terminal device, or the terminal device sends, to the base station, the information that is related to grouping of the terminal devices and that is specific to the terminal device. For example, when the information related to grouping of the terminal devices is the service requirement level, the core network sends the service requirement level of the terminal device to the access network device (when initiating the paging for the terminal device), or the terminal device sends the service requirement level of the terminal device to the access network device. When sending paging for a terminal device, the base station determines a group of the terminal device based on information that is related to grouping of the terminal devices and that is specific to the terminal device, and pages the terminal device.

According to the technical solution in this embodiment of this application, the terminal device and the core network device negotiate, based on a feature of the terminal device, the information related to grouping of the terminal devices, so that terminal devices with same or similar features can be added to a same group. The terminal devices are grouped based on service features of the terminal devices, so that terminal devices with same/similar service types or service requirements can be added to a same group, to ensure as much as possible that terminal devices paged this time belong to a same group. This decreases a probability that an unrelated terminal device is paged. The terminal devices are grouped based on a mobility feature, so that terminal devices with same or similar mobility states or speeds can be added to a same group, to prevent, when the network pages a terminal device with high mobility or a high speed, as much as possible a terminal device with low mobility or a low speed from generating unnecessary paging.

It should be understood that specific examples in this embodiment of this application are merely intended to help a person skilled in the art better understand embodiments of this application, but are not intended to limit the scope of embodiments of this application.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

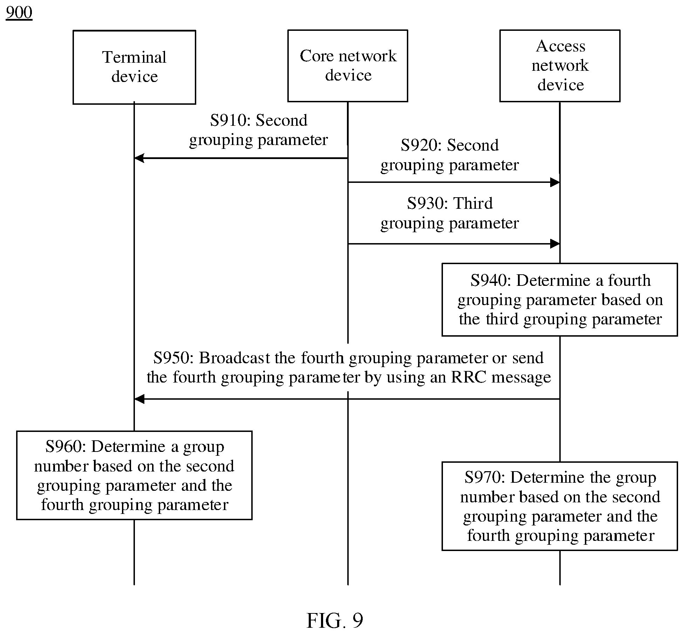

Similar to FIG. 8, FIG. 9 is a schematic diagram of another example of a paging method according to this application. Specifically, implementation steps of determining a group number are as follows.

S910: A core network device sends a second grouping parameter to a terminal device, and the terminal device receives the second grouping parameter sent by the core network device. The second grouping parameter is used to determine a group number of the terminal device.

It should be understood that the second grouping parameter may be but is not limited to a parameter related to a service of the terminal device, for example, a service requirement level of the terminal device. For example, there are currently a high service requirement level, a medium service requirement level, and a low service requirement level. A terminal device UE 1 determines, as the high level, a service requirement level expected by the terminal device UE 1.

Specifically, the terminal device may determine the second grouping parameter based on any one or more of the following content, namely, information related to grouping of the terminal devices, including: a quality of service (Quality of Service, QoS) parameter of the service of the terminal device, for example, a packet delay budget (Packet Delay Budget, PDB), a packet error rate (Packet Error Rate, PER), or a priority level (Default Priority Level), and/or a service type of the terminal device, for example, an enhanced mobile broadband (enhanced Mobile Broadband, eMBB) service, an ultra-reliable and low-latency paging (Ultra-Reliable and Low-Latency Communication, URLLC) service, or a massive machine type paging (massive Machine Type of Communication, mMTC) service, and/or a mobility state (mobility state) or a moving speed of the terminal device.

Specifically, the core network device determines the service requirement level of the terminal device, and directly sends the second grouping parameter to the terminal device. For example, the second grouping parameter is the service requirement level of the terminal device. It is assumed that there are currently the high service requirement level, the medium service requirement level, and the low service requirement level. A network device determines a service requirement level of the UE 1 as the high level based on the parameter related to the service of the terminal device, and sends the service requirement level to the terminal device. The terminal device UE 1 receives the service requirement level that is the high level and that is sent by the network device. The terminal device UE 1 and the network device reach a consensus. The second grouping parameter is used to determine the group of the terminal device.

S920: The core network device sends the second grouping parameter to an access network device, and the access network device receives the second grouping parameter sent by the core network device. The second grouping parameter is used to determine the group number of the terminal device.

Specifically, when sending paging to the terminal device, the access network device determines the group number of the terminal device based on the second grouping parameter and a fourth grouping parameter, and then sends the paging based on the group number. It is assumed that the access network device needs to page the terminal device UE 1, and a group number of the UE 1 is a group 1. In this case, the access network device only needs to page the group 1 in which the terminal device UE 1 is located.

S930: The core network device determines and sends a third grouping parameter to the access network device, and the access network device receives the third grouping parameter sent by the core network device. The third grouping parameter is used to determine the fourth grouping parameter.

Optionally, the third grouping parameter, namely, the information related to grouping of the terminal devices, may be but is not limited to the parameter related to the service of the terminal device, for example, all possible service requirement levels when information related to grouping of UE is the service requirement level. For example, there are currently the high service requirement level, the medium service requirement level, and the low service requirement level, and the core network device correspondingly divides the three service requirement levels into three groups.

It should be noted that the second grouping parameter is for a service requirement level corresponding to a specific terminal device. For example, service requirement levels of the UE 1 and UE 2 are respectively the high level and the low level. When the information related to grouping of the UE is the service requirement level, the third grouping parameter is group-related information obtained by the core network device by performing level classification on service requirements of all terminal devices that are within a management range. For example, the network device classifies service requirement levels of all the terminal devices into the high level, the medium level, and the low level, correspondingly divides the service requirement levels into the three groups, and sends the classification rule and the division result to a base station as the third grouping parameter, so that the base station determines the fourth grouping parameter based on the third grouping parameter. The fourth grouping parameter includes a group number range and/or a group number of a terminal device corresponding to each service requirement level.

Specifically, when initiating the paging for the terminal device, the core network device sends, to the base station, the information that is related to grouping of the terminal devices and that is specific to the terminal device. For example, when the information related to grouping of the terminal devices is the service requirement level, the core network device may notify the base station of all the possible service requirement levels. It is assumed that the network device classifies the service requirement levels of all the terminal devices into the high level, the medium level, and the low level, and correspondingly divides the service requirement levels into the three groups. The classification rule and the division result are sent to the base station as the third grouping parameter, so that the base station determines the fourth grouping parameter based on the third grouping parameter.

It should be noted that the terminal device may also send the second grouping information to the radio access network device.

S940: The access network device determines the fourth grouping parameter based on the third grouping parameter sent by the core network device. The fourth grouping parameter is used to determine the group number of the terminal device.

Specifically, the fourth grouping parameter includes but is not limited to the group number range and/or the group number used by the terminal device corresponding to each service requirement level. For example, based on the fact that the received service levels of the terminal devices are the high level, the medium level, and the low level, the access network device may correspondingly add the received service levels to group numbers, namely, a group A, a group B, and a group C, or the access network device correspondingly sets, to groups 0 to 2, groups 3 to 4, and groups 5 to 7 respectively, group number ranges to which high-level, medium-level, and low-level terminal devices belong.

S950: The access network device broadcasts the fourth grouping parameter to the terminal device or the access network device sends the fourth grouping parameter to the terminal device by using an RRC message, and the terminal device receives, from a broadcast message or the radio resource control RRC message, the fourth grouping parameter sent by the access network device. The fourth grouping parameter is used to determine the group number of the terminal device.

Specifically, for example, when the third grouping parameter is the service requirement level of the terminal device, the access network device may send a group number or a group number range corresponding to each service requirement level, and the terminal device receives the group number or the group number range corresponding to each service requirement level. It is assumed that the network device classifies the service requirement levels of all the terminal devices into the high level, the medium level, and the low level, and correspondingly divides the service requirement levels into six groups, and group number ranges are respectively groups 0 to 2, groups 3 to 4, and a group 5. In this case, the radio access network device may send the rule to the terminal device.

S960: The terminal device determines the group number based on the second grouping parameter and the fourth grouping parameter. The group number is used by the network device to send the paging.

Specifically, the terminal device receives the group number or the group number range corresponding to each service requirement level sent by the network device, and the terminal device receives the group number or the group number range corresponding to each service requirement level. It is assumed that the network device classifies the service requirement levels of all the terminal devices into the high level, the medium level, and the low level, and correspondingly divides the service requirement levels into the six groups, and the group number ranges are respectively the groups 0 to 2, the groups 3 to 4, and the group 5. In this case, after receiving the grouping rule that is related to the service requirement level and that is sent by the radio access network device, the terminal device determines the service requirement level of the terminal device based on the second grouping parameter, and further determines the group number to which the terminal device belongs.

S970: The access network device determines the group number based on the second grouping parameter and the fourth grouping parameter. The group number is used by the network device to send the paging.

Optionally, the core network sends, to the access network device (when initiating the paging for the terminal device), the information that is related to grouping of the terminal devices and that is specific to the terminal device, or the terminal device sends, to the base station, the information that is related to grouping of the terminal devices and that is specific to the terminal device. For example, when the information related to grouping of the terminal devices is the service requirement level, the core network sends the service requirement level of the terminal device to the access network device (when initiating the paging for the terminal device), or the terminal device sends the service requirement level of the terminal device to the access network device. When sending paging for a terminal device, the base station determines a group of the terminal device based on information that is related to grouping of the terminal devices and that is specific to the terminal device, and pages the terminal device.

According to the technical solution in this embodiment of this application, the terminal device and the core network device negotiate, based on a feature of the terminal device, the information related to grouping of the terminal devices, so that terminal devices with same or similar features can be added to a same group. The terminal devices are grouped based on service features of the terminal devices, so that terminal devices with same/similar service types or service requirements can be added to a same group, to ensure as much as possible that terminal devices paged this time belong to a same group. This decreases a probability that an unrelated terminal device is paged. The terminal devices are grouped based on a mobility feature, so that terminal devices with same or similar mobility states or speeds can be added to a same group, to prevent, when the network pages a terminal device with high mobility or a high speed, as much as possible a terminal device with low mobility or a low speed from generating unnecessary paging.

It should be understood that specific examples in this embodiment of this application are merely intended to help a person skilled in the art better understand embodiments of this application, but are not intended to limit the scope of embodiments of this application.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

The foregoing describes in detail the paging false alarm reduction method according to embodiments of this application, and the following describes a paging false alarm reduction apparatus according to embodiments of this application.

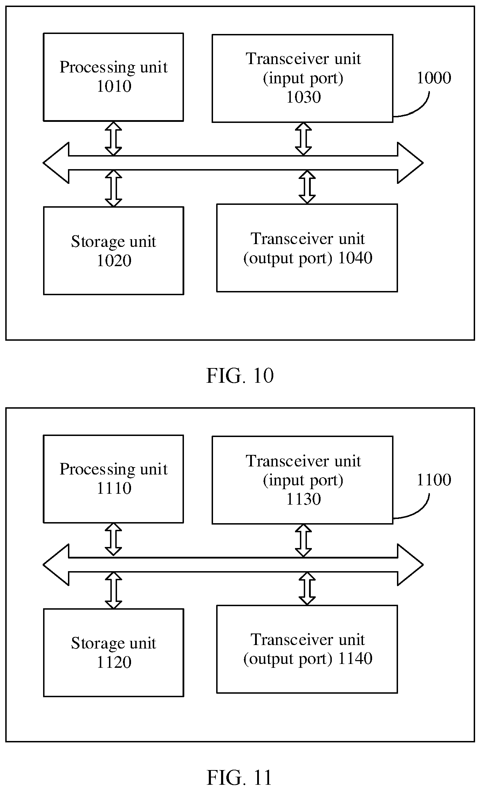

According to the foregoing methods, FIG. 10 is a schematic diagram of a paging apparatus 1000 according to an embodiment of this application.

The apparatus 1000 may be a network device, or may be a chip or a circuit, for example, a chip or a circuit that may be disposed in a network device.

The apparatus 1000 may include a processing unit 1010, and optionally, may further include a storage unit 1020. The memory 1020 is configured to store instructions.

In a possible manner, the processor 1010 is configured to execute the instructions stored in the memory 1020, to enable the apparatus 1000 to implement the steps performed by the network device in the foregoing methods.

Further, the apparatus 1000 may further include an input port 1030 (namely, an example of a paging unit) and an output port 1040 (namely, another example of a transceiver unit). Further, the processor 1010, the memory 1020, the input port 1030, and the output port 1040 may page each other through an internal connection path, to transmit a control signal and/or a data signal. The memory 1020 is configured to store a computer program. The processor 1010 may be configured to invoke the computer program from the memory 1020 and run the computer program, to complete the steps of the network device in the foregoing methods. The memory 1020 may be integrated into the processor 1010, or may be separated from the processor 1010.

Optionally, in a possible manner, the input port 1030 may be a receiver, and the output port 1040 is a transmitter. The receiver and the transmitter may be a same physical entity or different physical entities. When being a same physical entity, the receiver and the transmitter may be collectively referred to as a transceiver.

Optionally, in a possible manner, the input port 1030 is an input interface, and the output port 1040 is an output interface.

In an implementation, it may be considered that functions of the input port 1030 and the output port 1040 are implemented by using a transceiver circuit or a dedicated transceiver chip. It may be considered that the processor 1010 is implemented by using a dedicated processing chip, a processing circuit, a processor or a general-purpose chip.

In another implementation, it may be considered that the network device provided in this embodiment of this application is implemented by using a general-purpose computer. To be specific, program code for implementing functions of the processor 1010, the input port 1030, and the output port 1040 is stored in the memory 1020, and the general-purpose processor executes the code in the memory 1020 to implement the functions of the processor 1010, the input port 1030, and the output port 1040.

When the apparatus 1000 is a core network device, the core network device includes a processor, a memory, and an input/output apparatus. The processor is mainly configured to: process a paging protocol and paging data, control a terminal device, execute a software program, process data of the software program, and the like. The memory is mainly configured to store the software program and data. The input/output apparatus is configured to: receive data from another device (for example, an access network device or another core network device), and/or send data to the another device. In this case, a processor having a processing function may be considered as the processor 1010 of the terminal device. The processor 1010 may also be referred to as a processor, a processing board, a processing module, a processing apparatus, or the like. In addition, in this case, a receiving machine, a receiver, a receiver circuit, or the like may be considered as the input port 1030. A transmitting machine, a transmitter, a transmitter circuit, or the like may be considered as the output port 1040.

When the paging apparatus 1000 is a chip, the chip includes a transceiver circuit and a processing circuit. The transceiver circuit may be an input/output circuit or a paging interface. The processing circuit may be a processor, a microprocessor, or an integrated circuit integrated on the chip. The input circuit may be an input pin. The output circuit may be an output pin. The processing circuit may be a transistor, a gate circuit, a trigger, any logic circuit, or the like. An input signal received by the input circuit may be received and input by, for example, but not limited to, a receiver. A signal output by the output circuit may be output to, for example, but not limited to, a transmitter and transmitted by the transmitter. In addition, the input circuit and the output circuit may be different circuits, or may be a same circuit. In this case, the circuit is used as the input circuit and the output circuit at different moments.

In an implementation, the output port 1040 is configured to send first indication information. The first indication information is used to determine a type of first paging, and the type of the first paging includes paging non-repetition or paging repetition.

Optionally, the output port 1040 is specifically configured to:
send the first indication information if the type of the first paging is the paging non-repetition, where the first indication information is used to determine that the type of the first paging is the paging non-repetition; or
send the first indication information if the type of the first paging is the paging repetition, where the first indication information is used to determine that the type of the first paging is the paging repetition.

Optionally, the output port 1040 is further specifically configured to:
send same first indication information if a plurality of pieces of paging are same paging, where the first indication information is used to determine the type of the first paging, and the first paging is any one of the plurality of pieces of paging.

In another implementation, the input port 1030 is configured to receive first information. The first information is stay probability information of the terminal device in one or more camped/visited cells, and the first information is used to determine a paging range of the terminal device. The paging range is used by the network device to send paging.

The storage unit 1020 is configured to store the stay probability information in the camped/visited cell.

The processor 1010 is configured to determine the paging range of the terminal device based on the first information.

The output port 1040 is configured to send the paging based on the paging range. The paging is used to page the terminal device.

Optionally, the processor 1010 is specifically configured to:
if a core network receives the first information and the core network sends the paging, determine, by the core network, the paging range based on the first information; or
if an access network receives the first information and the access network sends the paging, determine, by the access network, the paging range based on the first information; or
if a core network receives the first information and an access network sends the paging, send, by the core network, data of the terminal device and the first information to a last serving base station last serving gNB for the terminal device, where the last serving base station last serving gNB determines the paging range based on the first information.

In another implementation, the output port 1040 is configured to send a first grouping parameter. The first grouping parameter is used to determine a group number of a radio resource control idle RRC_IDLE terminal device and a group number of a radio resource control inactive RRC_INACTIVE terminal device, and the group number is used by a network device to send paging.

The processor 1010 is configured to send the paging based on the group number, and the paging is used to page the terminal device.

Optionally, the output port 1040 is configured to: broadcast the first grouping parameter; or
send the first grouping parameter by using a radio resource control RRC message.

Optionally, the output port 1040 is specifically configured:
if grouping is performed based on UE identification information, a probability that UE is to be paged, or the like, broadcast group number ranges used by RRC_IDLE UE and RRC_INACTIVE UE, where for example, the group number range of the idle UE is 0 to M, and the group number range of the inactive UE is M+1 to N;
if grouping is performed based on UE identification information, a probability that UE is to be paged, or the like, broadcast, by the network device, a group number offset (offset) used by RRC _IDLE UE or RRC_INACTIVE UE, where for example, the group number offset of the idle UE or the inactive UE is M; or
for RRC_INACTIVE UE, if a method is the same as corresponding methods in the foregoing manner 1 and manner 2, configure, by the network device, a first grouping parameter of the inactive UE in the RRC message, for example, a group number range or a group number offset of the inactive UE.

In another implementation, when the apparatus 1000 is a core network device, the input port 1030 is configured to receive a second grouping parameter sent by a terminal device, for example, a service requirement level of the terminal device. The second grouping parameter is used to determine a group number of the terminal device.

The output port 1040 is configured to send the second grouping parameter to an access network device. The second grouping parameter is used to determine the group number of the terminal device.

The output port 1040 is configured to send a third grouping parameter to the access network device. The third grouping parameter is used to determine a fourth grouping parameter. The fourth grouping parameter is used to determine the group number of the terminal device, and the fourth grouping parameter and the second grouping parameter are used by the access network device to send paging.

Optionally, the input port 1030 is further configured to skip receiving the second grouping parameter sent by the terminal device.

Optionally, the output port 1040 is further configured to send an updated second grouping parameter. The updated second grouping parameter is determined based on the second grouping parameter sent by the terminal device, and the second grouping parameter is used to determine the group number of the terminal device.

Optionally, the processor 1010 is configured to determine the second grouping parameter. The second grouping parameter is used to determine the group number of the terminal device.

Optionally, the output port 1040 is further configured to send the second grouping parameter to the terminal device.

When the apparatus 1000 is an access network device, the input port 1030 is configured to receive a second grouping parameter. The second grouping parameter is used to determine a group number of a terminal device.

The input port 1030 is further configured to receive a third grouping parameter sent by a core network device. The third grouping parameter is used to determine a fourth grouping parameter.

The processor 1010 is configured to determine the fourth grouping parameter based on the third grouping parameter.

The output port 1040 is configured to send the fourth grouping parameter to the terminal device. The fourth grouping parameter is used to determine the group number of the terminal device.

Specifically, the output port 1040 is configured to: broadcast the fourth grouping parameter to the terminal device; or
send the fourth grouping parameter by using a radio resource control RRC message.

Functions and actions of the modules or units in the apparatus 1000 enumerated above are merely examples for description. When the apparatus 1000 is configured in or is the core network device, the modules or units in the apparatus 1000 may be configured to perform the actions or processing processes performed by the core network device in the foregoing methods. Herein, to avoid repetition, detailed descriptions are omitted.

For concepts, explanations, detailed descriptions, and other steps of the apparatus 1000 that are related to the technical solutions provided in embodiments of this application, refer to descriptions of the content in the foregoing methods or another embodiment. Details are not described herein again.

It should be understood that the structure of the apparatus 1000 shown in FIG. 10 is merely a possible form, but should not constitute any limitation to this embodiment of this application. This application does not exclude a possibility that there may be a network device structure in another form in the future.

It should be understood that the terminal device 1000 according to this embodiment of this application may correspond to a terminal device for transmitting control information in the foregoing method embodiments, and the foregoing and other management operations and/or functions of the modules in the terminal device 1000 are respectively used to implement corresponding steps of the foregoing methods. Therefore, beneficial effects in the foregoing method embodiments can also be implemented.

It should be further understood that, in this embodiment of this application, the processing module may be implemented by a processor and the transceiver module may be implemented by a transceiver.

According to the foregoing methods, FIG. 11 is a schematic diagram of a paging apparatus 1100 according to an embodiment of this application.

The apparatus 1100 may be a terminal device, or may be a chip or a circuit, for example, a chip or a circuit that may be disposed in a terminal device.

The apparatus 1100 may include a processor 1110, and optionally, may further include a storage unit 1120. The storage unit 1120 is configured to store instructions.

In a possible manner, the processor 1110 is configured to execute the instructions stored in the storage unit 1120, to enable the apparatus 1100 to implement the steps performed by the terminal device (for example, the terminal device 120 or the terminal device 230) in the foregoing methods.

Further, the apparatus 1100 may further include an input port 1130 (namely, an example of a paging unit) and an output port 1140 (namely, another example of a transceiver unit). Further, the processor 1110, the storage unit 1120, the input port 1130, and the output port 1140 may page each other through an internal connection path, to transmit a control signal and/or a data signal. The storage unit 1120 is configured to store a computer program. The processor 1110 may be configured to invoke the computer program from the storage unit 1120 and run the computer program, to complete the steps of the terminal device in the foregoing methods. The storage unit 1120 may be integrated into the processor 1110, or may be separated from the processor 1110.

Optionally, in a possible manner, the input port 1130 may be a receiver, and the output port 1140 is a transmitter. The receiver and the transmitter may be a same physical entity or different physical entities. When being a same physical entity, the receiver and the transmitter may be collectively referred to as a transceiver.

Optionally, in a possible manner, the input port 1130 is an input interface, and the output port 1140 is an output interface.

In an implementation, it may be considered that functions of the input port 1130 and the output port 1140 are implemented by using a transceiver circuit or a dedicated transceiver chip. It may be considered that the processor 1110 is implemented by using a dedicated processing chip, a processing circuit, a processor, or a general-purpose chip.

In another implementation, it may be considered to implement the terminal device provided in this embodiment of this application by using a general-purpose computer. To be specific, program code for implementing functions of the processor 1110, the input port 1130, and the output port 1140 is stored in the storage unit 1120, and the general-purpose processor executes the code in the storage unit 1120 to implement the functions of the processor 1110, the input port 1130, and the output port 1140.

When the apparatus 1100 is a terminal device, the terminal device includes a processor, a storage unit, a radio frequency circuit, an antenna, and an input/output apparatus. The processor is mainly configured to: process a paging protocol and paging data, control the terminal device, execute a software program, process data of the software program, and the like. The storage unit is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user. It should be noted that some types of terminal devices may have no input/output apparatus. When needing to send data, after performing baseband processing on the to-be-sent data, the processor outputs a baseband signal to the radio frequency circuit; and the radio frequency circuit performs radio frequency processing on the baseband signal and then sends a radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, the storage unit may also be referred to as a storage medium, a storage device, or the like. The storage unit may be disposed independent of the processor, or may be integrated with the processor. This is not limited in this embodiment of this application. In this case, a processor having a processing function may be considered as the processor 1110 of the terminal device. The processor 1110 may also be referred to as a processor, a processing board, a processing module, a processing apparatus, or the like. In addition, in this case, a receiving machine, a receiver, a receiver circuit, or the like may be considered as the input port 1130. A transmitting machine, a transmitter, a transmitter circuit, or the like may be considered as the output port 1140.

When the paging apparatus 1100 is a chip, the chip includes a transceiver circuit and a processing circuit. The transceiver circuit may be an input/output circuit or a paging interface. The processing circuit may be a processor, a microprocessor, or an integrated circuit integrated on the chip. The input circuit may be an input pin. The output circuit may be an output pin. The processing circuit may be a transistor, a gate circuit, a trigger, any logic circuit, or the like. An input signal received by the input circuit may be received and input by, but not limited to, a receiver. A signal output by the output circuit may be output to, but not limited to, a transmitter and transmitted by the transmitter. In addition, the input circuit and the output circuit may be different circuits, or may be a same circuit. In this case, the circuit is used as the input circuit and the output circuit at different moments.

In an implementation, the input port 1130 is configured to receive first indication information from a network device. The first indication information is used to determine a type of first paging, and the type of the first paging includes paging non-repetition or paging repetition.

The processor 1110 is configured to determine the type of the first paging based on the first indication information.

The processor 1110 is configured to determine, based on the type of the first paging, to receive or not to receive the first paging.

Optionally, the processor 1110 is specifically configured to:
receive the first paging if the type of the first paging is the paging non-repetition; or
skip receiving the first paging if the type of the first paging is the paging repetition.

Optionally, the processor 1110 is specifically configured to:
receive the first paging if the type of the first paging is the paging repetition and no paging has been received before the first paging; or
skip receiving the first paging if the type of the first paging is the paging repetition and paging has been received before the first paging.

Optionally, the processor 1110 is specifically configured to:
if the first indication information of the first paging is different from first indication information received last time, determine that the type of the first paging is the paging non-repetition, and receive the first paging; or
if the first indication information of the first paging is the same as first indication information received last time, determine that the type of the first paging is the paging repetition, and skip receiving the first paging.

Optionally, whether to receive paging is determined with reference to a wake-up signal WUS mechanism.

The input port 1130 is configured to receive a wake-up signal WUS from the network device. The wake-up signal WUS is used to determine to receive or not to receive the first paging.

The processing unit 1110 is configured to determine, based on the wake-up signal WUS and the first indication information, to receive or not to receive the first paging.

The processing unit 1110 is specifically configured to:
if the WUS indicates that the terminal device needs to receive the first paging, receive the first paging if the first paging is newly sent paging, or if the first paging is repeatedly sent paging, receive, by the terminal device, the first paging when the terminal device has not received the paging; or
if the WUS indicates that the terminal device does not need to receive the first paging, directly skip receiving, by the terminal device, the first paging; or receive the first paging.

In another implementation, the output port 1140 is configured to send first information to a network device. The cell information includes but is not limited to cell identification information, stay probability information of the terminal device in a cell, specific time information, and the like.

The processing unit 1110 is configured to determine the first information. The first information is stay probability information of the terminal device in one or more camped/visited cells, and the first information is used to determine a paging range of the terminal device. The paging range is used by the network device to send paging.

The input port 1130 is configured to receive the paging sent by the network device. The paging is used to page the terminal device.

Optionally, that the output port 1140 is specifically configured to send the first information includes:
sending the first information to a core network and/or a radio access network.

In another implementation, the input port 1130 is configured to receive a first grouping parameter (for example, a group number range or a group number offset) sent by a network device. The first grouping parameter is used to determine a group number of a radio resource control idle RRC_IDLE terminal device and a group number of a radio resource control inactive RRC_INACTIVE terminal device.

Specifically, the input port 1130 is specifically configured to:
receive the first grouping parameter from a broadcast message; or
receive the first grouping parameter from a radio resource control RRC message.

The processing unit 1110 is configured to determine the group number based on the first grouping parameter. The group number is used by the network device to send the paging.

The input port 1130 is further configured to receive the paging. The paging is used to page the terminal device.

The processing unit 1110 is configured to: determine, by the RRC_IDLE terminal device, the group number based on a first group number range or a first group number offset, or determine, by the RRC_INACTIVE terminal device, the group number based on a second group number range or a second group number offset.

Optionally, the processing unit 1110 is configured to:
determine, by the RRC_IDLE terminal device, the group number based on the first group number range or the first group number offset; or
determine, by the RRC_INACTIVE terminal device, the group number based on the second group number range or the second group number offset.

Optionally, the processing unit 1110 is specifically configured to:
if grouping is performed based on UE identification information, a probability that UE is to be paged, or the like, determine, by the terminal device, a group number of the terminal device based on the group number range, where for example, if a group number range of an idle UE is 0 to M, a group number finally used by the idle UE needs to fall within a range of 0 to M; or
if grouping is performed based on UE identification information, a probability that UE is to be paged, or the like, determine, by the terminal device, a group number of the terminal device based on the group number offset, where for example, if a group number offset of the idle UE is W, when calculating a finally used group number, the terminal device needs to use the group number offset; or
for the RRC_INACTIVE UE, if a method is the same as corresponding method in the foregoing manner 1 and manner 2, determine, by the terminal device, that a group number of the terminal device falls within the group number range, or determine a group number of the terminal device by using the group number offset.

In another implementation, the output port 1140 is configured to send a second grouping parameter to a network device. For example, the terminal device sends a service requirement level of the terminal device to the network device.

The input port 1130 is configured to receive a fourth grouping parameter sent by the access network device. The fourth grouping parameter is used by the terminal device to determine the group number.

Optionally, the input port 1130 is specifically configured to:
receive, from a broadcast message, the first grouping parameter sent by the access network device; or
receive, from a radio resource control RRC message, the first grouping parameter sent by the access network device.

The processing unit 1110 is configured to determine the group number based on the second grouping parameter and the fourth grouping parameter.

Optionally, if a core network device does not receive the second grouping parameter sent by the terminal device,
the output port 1140 is configured to send an updated second grouping parameter, or
the input port 1130 is configured to receive an updated second grouping parameter sent by the core network device, where the second grouping parameter is used by the terminal device to determine a group number.

Optionally, the input port 1130 is further configured to receive the second grouping parameter sent by the core network device. The second grouping parameter is used to determine the group number of the terminal device.

Functions and actions of the modules or units in the apparatus 1100 enumerated above are merely examples for description. When the apparatus 1100 is configured in or is the terminal device, the modules or units in the apparatus 1100 may be configured to perform the actions or processing processes performed by the terminal device in the foregoing methods. Herein, to avoid repetition, detailed descriptions are omitted.

For concepts, explanations, detailed descriptions, and other steps of the apparatus 1100 that are related to the technical solutions provided in embodiments of this application, refer to descriptions of the content in the foregoing methods or another embodiment. Details are not described herein again.

It should be understood that the structure of the apparatus 1100 shown in FIG. 11 is merely a possible form, but should not constitute any limitation to this embodiment of this application. This application does not exclude a possibility that there may be a terminal device in another form in the future.

It should be understood that the network device 1100 according to this embodiment of this application may correspond to a network device for transmitting control information in the foregoing method embodiments, and the foregoing and other management operations and/or functions of the modules in the network device 1100 are respectively used to implement corresponding steps of the foregoing methods. Therefore, beneficial effects in the foregoing method embodiments can also be implemented.

It should be further understood that, in this embodiment of this application, the processing module may be implemented by a processor and the transceiver module may be implemented by a transceiver.

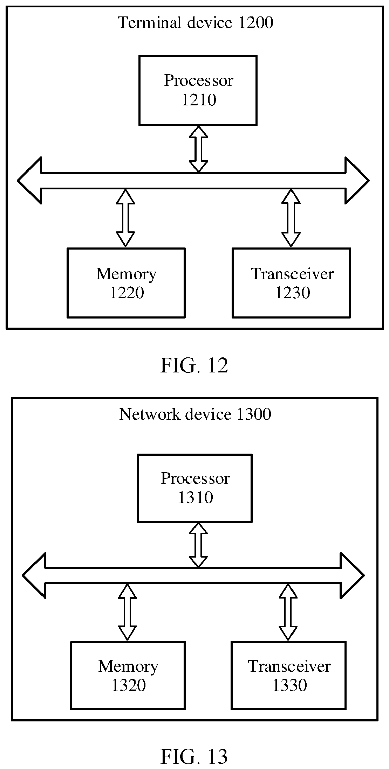

FIG. 12 is a block diagram of a structure of a terminal device 1200 according to an embodiment of this application. The terminal device 1200 shown in FIG. 12 includes a processor 1210, a memory 1220, and a transceiver 1230.

The processor 1210, the memory 1220, and the transceiver 1230 communicate with each other through an internal connection path, to transmit a control signal and/or a data signal. In a possible design, the processor 1210, the memory 1220, and the transceiver 1230 may be implemented by using a chip. The memory 1220 may store program code, and the processor 1210 invokes the program code stored in the memory 1220, to implement a corresponding function of the terminal device.

The processor 1210 is configured to determine a type of first paging based on first indication information.

The processor 1210 is configured to determine a group number based on a first grouping parameter. The group number is used by a network device to send paging.

The processor 1210 is configured to: determine, by an RRC_IDLE terminal device, the group number based on a first group number range or a first group number offset, or determine, by an RRC_INACTIVE terminal device, the group number based on a second group number range or a second group number offset.

The processor 1210 is configured to determine, based on the type of the first paging, to receive or not to receive the first paging.

The processor 1210 is specifically configured to:
if a WUS indicates that the terminal device needs to receive the first paging, receive, by the terminal device, the first paging if the first paging is newly sent paging, or if the first paging is repeatedly sent paging, receive, by the terminal device, the first paging when the terminal device has not received the paging; or
if a WUS indicates that the terminal device does not need to receive the first paging, directly skip receiving, by the terminal device, the first paging; or receive the first paging.

First indication information is received from a network device by using the transceiver 1230. The first indication information is used to determine the type of the first paging, and the type of the first paging includes paging non-repetition or paging repetition.

The wake-up signal WUS is received from the network device by using the transceiver 1230. The wake-up signal WUS is used to determine to receive or not to receive the first paging.

First information is sent to the network device by using the transceiver 1230. The cell information includes but is not limited to cell identification information, stay probability information of the terminal device in a cell, specific time information, and the like.

The first grouping parameter (for example, a group number range or a group number offset) sent by the network device is received by using the transceiver 1230. The first grouping parameter is used to determine a group number of a radio resource control idle RRC_IDLE terminal device and a group number of a radio resource control inactive RRC_INACTIVE terminal device.

Other specific implementations of the processor 1210, the memory 1220, and the transceiver 1230 in the terminal device 1200 in this embodiment of this application are not described herein again.

It may be understood that, although not shown, the terminal device 1200 may further include another apparatus, for example, an input apparatus, an output apparatus, or a battery.

Optionally, in some embodiments, the memory 1220 may store some or all instructions used to perform the method performed by the terminal device in the foregoing methods. The processor 1210 may execute the instructions stored in the memory 1220, to complete, in combination with other hardware (for example, the transceiver 1230), the steps performed by the terminal device in the foregoing methods. For a specific working process and beneficial effects, refer to descriptions in the foregoing method embodiments.

FIG. 13 is a block diagram of a structure of a network device 1300 according to an embodiment of this application. The network device 1300 shown in FIG. 13 includes a processor 1310, a memory 1320, and a transceiver 1330.

The processor 1310, the memory 1320, and the transceiver 1330 communicate with each other through an internal connection path, to transmit a control signal and/or a data signal. In a possible design, the processor 1310, the memory 1320, and the transceiver 1330 may be implemented by using a chip. The memory 1320 may store program code, and the processor 1310 invokes the program code stored in the memory 1320, to implement a corresponding function of the network device.

The processor 1310 is configured to:
if a core network receives first information and the core network sends paging, the core network determines a paging range based on the first information; or
if an access network receives first information and the access network sends paging, the access network determines a paging range based on the first information; or
if a core network receives first information and an access network sends paging, the core network sends data of a terminal device and the first information to a last serving base station last serving gNB of the terminal device, and the last serving base station last serving gNB determines a paging range based on the first information.

The processor 1310 is configured to determine a second grouping parameter. The second grouping parameter is used to determine a group number of the terminal device.

The processor 1310 is configured to determine a paging range of the terminal device based on the first information.

The processor 1310 is configured to determine a fourth grouping parameter based on a third grouping parameter.

First indication information is sent by using the transceiver 1330. The first indication information is used to determine a type of first paging, and the type of the first paging includes paging non-repetition or paging repetition.

The first information is received by using the transceiver 1330. The first information is stay probability information of the terminal device in one or more camped/visited cells, and the first information is used to determine a paging range of the terminal device. The paging range is used by the network device to send the paging.

A first grouping parameter is sent by using the transceiver 1330. The first grouping parameter is used to determine a group number of a radio resource control idle RRC_IDLE terminal device and a group number of a radio resource control inactive RRC_INACTIVE terminal device, and the group number is used by the network device to send the paging.

The first grouping parameter is broadcast by using the transceiver 1330, or the first grouping parameter is sent by using a radio resource control RRC message.

The second grouping parameter sent by the terminal device, for example, a service requirement level of the terminal device, is received by using the transceiver 1330. The second grouping parameter is used to determine the group number of the terminal device.

The second grouping parameter is sent to an access network device by using the transceiver 1330. The second grouping parameter is used to determine the group number of the terminal device.

The third grouping parameter is sent to the access network device by using the transceiver 1330. The third grouping parameter is used to determine the fourth grouping parameter, and the fourth grouping parameter is used to determine the group number of the terminal device. The group number is used by the access network device to send the paging.

Other specific implementations of the processor 1310, the memory 1320, and the transceiver 1330 in the network device 1300 in this embodiment of this application are not described herein again.

It may be understood that, although not shown, the network device 1300 may further include another apparatus, for example, an input apparatus, an output apparatus, or a battery.

Optionally, in some embodiments, the memory 1320 may store some or all instructions used to perform the method performed by the network device in the foregoing methods. The processor 1310 may execute the instructions stored in the memory 1320, to complete, in combination with other hardware (for example, the transceiver 1330), the steps performed by the network device in the foregoing methods. For a specific working process and beneficial effects, refer to descriptions in the foregoing method embodiments.

It may be understood that, when embodiments of this application are applied to a chip of a network device, the chip of the network device implements a function of the network device in the foregoing method embodiments. The chip of the network device receives an uplink shared channel and uplink data from another module (for example, a radio frequency module or an antenna) in the network device. The uplink shared channel and downlink data are sent by a terminal device to the network device.

When embodiments of this application are applied to a chip of a terminal device, the chip of the terminal device implements a function of the terminal device in the foregoing method embodiments. The chip of the terminal device sends an uplink shared channel and downlink data from another module (for example, a radio frequency module or an antenna) in the terminal device.

The methods disclosed in embodiments of this application may be applied to a processor or may be implemented by a processor. The processor may be an integrated circuit chip and has a signal processing capability. In an implementation process, the steps in the foregoing methods may be implemented by using a hardware integrated logical circuit in a processor or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate, a transistor logic device, or a discrete hardware component, may be a system on a chip (system on chip, SoC), may be a central processing unit (central processing unit, CPU), may be a network processor (network processor, NP), may be a digital signal processor (digital signal processor, DSP), may be a micro controller unit (micro controller unit, MCU), or may be a programmable logic device (programmable logic device, PLD) or another integrated chip. The processor may implement or perform the methods, steps, and logical block diagrams that are disclosed in embodiments of this application. The general-purpose processor may be a microprocessor, or the processor may be any conventional processor or the like.

The steps of the methods disclosed with reference to embodiments of this application may be directly executed and accomplished by a hardware decoding processor, or may be executed and accomplished by using a combination of hardware in a decoding processor and a software module. The software module may be located in a mature storage medium in the art, for example, a random access memory (random access memory, RAM), a flash memory, a read-only memory (read-only memory, ROM), a programmable read-only memory, an electrically erasable programmable memory, or a register. The storage medium is located in the memory, and the processor reads instructions in the memory and completes the steps in the foregoing methods in combination with hardware of the processor.

It should be further understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When the software is used to implement embodiments, all or some of the foregoing embodiments may be implemented in a form of a computer program product. The computer program product includes one or more computer instructions or computer programs. When the program instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It should be understood that the term "and/or" in embodiments of this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between associated objects.

It should be further understood that "first" and "second" in embodiments of this application are merely for a distinguishing purpose and shall constitute no limitation on this application.

A person of ordinary skill in the art may be aware that units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or paging connections may be implemented through some interfaces. The indirect couplings or paging connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only storage unit, a random access storage unit, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A paging method, comprising:
receiving first indication information, wherein the first indication information is used to determine a type of first paging, and the type of the first paging comprises paging non-repetition or paging repetition;
determining the type of the first paging based on the first indication information; and
determining, based on the type of the first paging, to receive or not to receive the first paging.

2. The method according to claim 1, wherein the paging repetition satisfies:
if message content of the first paging is the same as message content of second paging, the first paging is repeated paging, and the second paging is paging sent before the first paging; or
if a terminal device of the first paging belongs to a terminal device of second paging, the first paging is repeated paging, and the second paging is paging sent before the first paging.

3. The method according to claim 1 or 2, wherein the determining, based on the type of the first paging, to receive or not to receive the first paging comprises:
receiving the first paging if the type of the first paging is the paging non-repetition; or
skipping receiving the first paging if the type of the first paging is the paging repetition.

4. The method according to claim 1 or 2, wherein the determining, based on the type of the first paging, to receive or not to receive the first paging further comprises:
receiving the first paging if the type of the first paging is the paging repetition and no paging has been received before the first paging; or
skipping receiving the first paging if the type of the first paging is the paging repetition and paging has been received before the first paging.

5. The method according to claim 4, wherein that no paging has been received before the first paging comprises:
no paging has been received within first duration before the first paging and/or in a currently camped serving cell; or
no paging the same as the first paging has been received before the first paging.

6. The method according to claim 4, wherein that the paging has been received before the first paging comprises:
the paging has been received within first duration before the first paging and/or in a currently camped serving cell; or
paging the same as the first paging has been received before the first paging.

7. The method according to claim 1 or 2, wherein the determining, based on the type of the first paging, to receive or not to receive the first paging further comprises:
if the first indication information of the first paging is different from first indication information received last time, determining that the type of the first paging is the paging non-repetition, and receiving the first paging; or
if the first indication information of the first paging is the same as first indication information received last time, determining that the type of the first paging is the paging repetition, and skipping receiving the first paging.

8. The method according to any one of claims 1 to 7, wherein the method further comprises:
receiving a wake-up signal WUS, wherein the wake-up signal WUS is used to determine to receive or not to receive the first paging; and
determining, based on the wake-up signal WUS and the first indication information, to receive or not to receive the first paging.

9. A paging method, comprising:
sending first indication information, wherein the first indication information is used to determine a type of first paging, and the type of the first paging comprises paging non-repetition or paging repetition.

10. The method according to claim 9, wherein the paging repetition satisfies:
if message content of the first paging is the same as message content of second paging, the first paging is repeated paging, and the second paging is paging sent before the first paging; or
if a terminal device of the first paging belongs to a terminal device of second paging, the first paging is repeated paging, and the second paging is paging sent before the first paging.

11. The method according to claim 9 or 10, wherein the sending first indication information comprises:
sending the first indication information if the type of the first paging is the paging non-repetition, wherein the first indication information is used to determine that the type of the first paging is the paging non-repetition; or
sending the first indication information if the type of the first paging is the paging repetition, wherein the first indication information is used to determine that the type of the first paging is the paging repetition.

12. The method according to claim 9 or 10, wherein the sending first indication information further comprises:
sending same first indication information if a plurality of pieces of paging are same paging, wherein the first indication information is used to determine the type of the first paging, and the first paging is any one of the plurality of pieces of paging.

13. A communication method, comprising:
determining first information, wherein the first information comprises identification information of one or more cells that a terminal device camps on/visits and second information, and the second information is stay probability information of the terminal device in the one or more camped/visited cells; and
sending the first information.

14. The method according to claim 13, wherein the first information further comprises:
stay probability information of the terminal device in the one or more cells within a first time period; or
stay probability information of the terminal device in a first cell within a plurality of time periods.

15. The method according to claim 13 or 14, wherein the sending the first information comprises:
sending the first information to a core network and/or a radio access network.

16. A communication method, comprising:
receiving first information, wherein the first information comprises identification information of one or more cells that a terminal device camps on/visits and second information, the second information is stay probability information of the terminal device in the one or more camped/visited cells, and the first information is used by a network device to determine a paging range; and
determining the paging range based on the first information.

17. The method according to claim 16, wherein the first information further comprises:
stay probability information of the terminal device in the one or more cells within a first time period; or
stay probability information of the terminal device in a first cell within a plurality of time periods.

18. The method according to claim 16 or 17, wherein the determining the paging range based on the first information comprises:
if a core network receives the first information and the core network sends paging, determining, by the core network, the paging range based on the first information; or
if an access network receives the first information and the access network sends paging, determining, by the access network, the paging range based on the first information; or
if a core network receives the first information and an access network sends paging, sending, by the core network, data of the terminal device and the first information to a last serving base station last serving gNB for the terminal device, and determining, by the last serving base station, the paging range based on the first information.

19. A paging method, comprising:
receiving a first grouping parameter, wherein the first grouping parameter is used to determine a group number of a radio resource control idle RRC_IDLE terminal device and/or a group number of a radio resource control inactive RRC_INACTIVE terminal device; and
determining the group number based on the first grouping parameter, wherein the group number is used by a network device to send paging.

20. The method according to claim 19, wherein the first grouping parameter comprises a group number range or a group number offset;
the group number range comprises a first group number range and/or a second group number range, the first group number range is a group number range of the RRC_IDLE terminal device, and the second group number range is a group number range of the RRC_INACTIVE terminal device; and
the group number offset comprises a first group number offset and/or a second group number offset, the first group number offset is a group number offset of the RRC_IDLE terminal device, and the second group number offset is a group number offset of the RRC_INACTIVE terminal device.

21. The method according to claim 19 or 20, wherein the receiving a first grouping parameter comprises:
receiving the first grouping parameter from a broadcast message; or
receiving the first grouping parameter from a radio resource control RRC message.

22. The method according to any one of claims 19 to 21, wherein determining the group number of the terminal device based on the first grouping parameter comprises:
determining, by the RRC_IDLE terminal device, the group number based on the first group number range or the first group number offset; or
determining, by the RRC_INACTIVE terminal device, the group number based on the second group number range or the second group number offset.

23. A paging method, comprising:
sending a first grouping parameter, wherein the first grouping parameter is used to determine a group number of a radio resource control idle RRC_IDLE terminal device and/or a group number of a radio resource control inactive RRC_INACTIVE terminal device, and the group number is used by a network device to send paging.

24. The method according to claim 23, wherein the first grouping parameter comprises a group number range or a group number offset;
the group number range comprises a first group number range and a second group number range, the first group number range is a group number range of the RRC_IDLE terminal device, and the second group number range is a group number range of the RRC_INACTIVE terminal device; and
the group number offset comprises a first group number offset and a second group number offset, the first group number offset is a group number offset of the RRC_IDLE terminal device, and the second group number offset is a group number offset of the RRC_INACTIVE terminal device.

25. The method according to claim 23 or 24, wherein the sending a first grouping parameter comprises:
broadcasting the first grouping parameter; or
sending the first grouping parameter by using a radio resource control RRC message.

26. A paging method, comprising:
sending a second grouping parameter, wherein the second grouping parameter is used to determine a group number of a terminal device;
receiving a fourth grouping parameter, wherein the fourth grouping parameter is used to determine the group number of the terminal device; and
determining the group number of the terminal device based on the second grouping parameter and the fourth grouping parameter, wherein the group number is used by a network device to send paging.

27. The method according to claim 26, wherein the second grouping parameter is determined based on a quality of service parameter of a service of the terminal device, and/or a service type of the terminal device, and/or a mobility state or a speed of the terminal device.

28. The method according to claim 26 or 27, wherein the receiving a fourth grouping parameter comprises:
receiving the fourth grouping parameter from a broadcast message; or
receiving the fourth grouping parameter from a radio resource control RRC message.

29. The method according to any one of claims 26 to 28, wherein the method further comprises:
receiving an updated second grouping parameter, wherein the second grouping parameter is used to determine the group number of the terminal device.

30. A paging method, comprising:
receiving a second grouping parameter, wherein the second grouping parameter is used to determine a group number of a terminal device; and
sending the second grouping parameter and a third grouping parameter to an access network device, wherein the third grouping parameter is used to determine a fourth grouping parameter.

31. The method according to claim 30, wherein the second grouping parameter is determined based on a quality of service parameter of a service of the terminal device, and/or a service type of the terminal device, and/or a mobility state or a speed of the terminal device.

32. The method according to claim 30 or 31, wherein the method further comprises:
sending an updated second grouping parameter, wherein the second grouping parameter is used to determine the group number of the terminal device.

33. A paging method, comprising:
receiving a second grouping parameter, wherein the second grouping parameter is used to determine a group number of a terminal device;
receiving a third grouping parameter, wherein the third grouping parameter is used to determine a fourth grouping parameter;
determining the fourth grouping parameter based on the third grouping parameter;
sending the fourth grouping parameter, wherein the fourth grouping parameter is used to determine the group number of the terminal device; and
determining the group number of the terminal device based on the second grouping parameter and the fourth grouping parameter, wherein the group number is used by a network device to send paging.

34. The method according to claim 33, wherein the second grouping parameter is determined based on a quality of service parameter of a service of the terminal device, and/or a service type of the terminal device, and/or a mobility state or a speed of the terminal device.

35. The method according to claim 33 or 34, wherein the sending the fourth grouping parameter comprises:
broadcasting the fourth grouping parameter; or
sending the fourth grouping parameter by using a radio resource control RRC message.

36. A paging apparatus, comprising:
a transceiver unit, configured to receive first indication information, wherein the first indication information is used to determine a type of first paging, and the type of the first paging comprises paging non-repetition or paging repetition; and
a processing unit, configured to determine the type of the first paging based on the first indication information, wherein
the processing unit is configured to determine, based on the type of the first paging, to receive or not to receive the first paging.

37. The apparatus according to claim 36, wherein the paging repetition satisfies:
if message content of the first paging is the same as message content of second paging, the first paging is repeated paging, and the second paging is paging sent before the first paging; or
if a terminal device of the first paging belongs to a terminal device of second paging, the first paging is repeated paging, and the second paging is paging sent before the first paging.

38. The apparatus according to claim 36 or 37, wherein that the processing unit is configured to determine, based on the type of the first paging, to receive or not to receive the first paging comprises:
receiving the first paging if the type of the first paging is the paging non-repetition; or
skipping receiving the first paging if the type of the first paging is the paging repetition.

39. The apparatus according to claim 36 or 37, wherein that the processing unit is configured to determine, based on the type of the first paging, to receive or not to receive the first paging further comprises:
receiving the first paging if the type of the first paging is the paging repetition and no paging has been received before the first paging; or
skipping receiving the first paging if the type of the first paging is the paging repetition and paging has been received before the first paging.

40. The apparatus according to claim 39, wherein that no paging has been received before the first paging comprises:
no paging has been received within first duration before the first paging and/or in a currently camped serving cell; or
no paging the same as the first paging has been received before the first paging.

41. The apparatus according to claim 39, wherein that the paging has been received before the first paging comprises:
the paging has been received within first duration before the first paging and/or in a currently camped serving cell; or
paging the same as the first paging has been received before the first paging.

42. The apparatus according to claim 36 or 37, wherein that the processing unit is configured to determine, based on the type of the first paging, to receive or not to receive the first paging further comprises:
if the first indication information of the first paging is different from first indication information received last time, determining that the type of the first paging is the paging non-repetition, and receiving the first paging; or
if the first indication information of the first paging is the same as first indication information received last time, determining that the type of the first paging is the paging repetition, and skipping receiving the first paging.

43. The apparatus according to any one of claims 36 to 42, wherein the apparatus further comprises:
the transceiver unit is configured to receive a wake-up signal WUS, and the wake-up signal WUS is used to determine to receive or not to receive the first paging; and
the processing unit is configured to determine, based on the wake-up signal WUS and the first indication information, to receive or not to receive the first paging.

44. A paging apparatus, comprising:
a transceiver unit, configured to send first indication information, wherein the first indication information is used to determine a type of first paging, and the type of the first paging comprises paging non-repetition or paging repetition.

45. The apparatus according to claim 44, wherein the paging repetition satisfies:
if message content of the first paging is the same as message content of second paging, the first paging is repeated paging, and the second paging is paging sent before the first paging; or
if a terminal device of the first paging belongs to a terminal device of second paging, the first paging is repeated paging, and the second paging is paging sent before the first paging.

46. The apparatus according to claim 44 or 45, wherein that the transceiver unit is configured to send the first indication information comprises:
sending the first indication information if the type of the first paging is the paging non-repetition, wherein the first indication information is used to determine that the type of the first paging is the paging non-repetition; or
sending the first indication information if the type of the first paging is the paging repetition, wherein the first indication information is used to determine that the type of the first paging is the paging repetition.

47. The apparatus according to claim 44 or 45, wherein that the transceiver unit is configured to send the first indication information further comprises:
sending same first indication information if a plurality of pieces of paging are same paging, wherein the first indication information is used to determine the type of the first paging, and the first paging is any one of the plurality of pieces of paging.

48. A communication apparatus, comprising:
a processing unit, configured to determine first information, wherein the first information comprises identification information of one or more cells that a terminal device camps on/visits and second information, and the second information is stay probability information of the terminal device in the one or more camped/visited cells; and
a transceiver unit, configured to send the first information.

49. The apparatus according to claim 48, wherein the first information further comprises:
stay probability information of the terminal device in the one or more cells within a first time period; or
stay probability information of the terminal device in a first cell within a plurality of time periods.

50. The apparatus according to claim 48 or 49, wherein that the transceiver unit is configured to send the first information comprises:
sending the first information to a core network and/or a radio access network.

51. A communication apparatus, comprising:
a transceiver unit, configured to receive first information, wherein the first information comprises identification information of one or more cells that a terminal device camps on/visits and second information, the second information is stay probability information of the terminal device in the one or more camped/visited cells, and the first information is used by a network device to determine a paging range; and
a processing unit, configured to determine the paging range based on the first information.

52. The apparatus according to claim 51, wherein the first information further comprises:
stay probability information of the terminal device in the one or more cells within a first time period; or
stay probability information of the terminal device in a first cell within a plurality of time periods.

53. The apparatus according to claim 51 or 52, wherein that the processing unit is configured to determine the paging range based on the first information comprises:
if a core network receives the first information and the core network sends paging, determining, by the core network, the paging range based on the first information; or
if an access network receives the first information and the access network sends paging, determining, by the access network, the paging range based on the first information; or
if a core network receives the first information and an access network sends paging, sending, by the core network, data of the terminal device and the first information to a last serving base station last serving gNB for the terminal device, and determining, by the last serving base station, the paging range based on the first information.

54. A paging apparatus, comprising:
a transceiver unit, configured to receive a first grouping parameter, wherein the first grouping parameter is used to determine a group number of a radio resource control idle RRC_IDLE terminal device and/or a group number of a radio resource control inactive RRC_INACTIVE terminal device; and
a processing unit, configured to determine the group number based on the first grouping parameter, wherein the group number is used by a network device to send paging.

55. The apparatus according to claim 54, wherein the first grouping parameter comprises a group number range or a group number offset;
the group number range comprises a first group number range and/or a second group number range, the first group number range is a group number range of the RRC_IDLE terminal device, and the second group number range is a group number range of the RRC _INACTIVE terminal device; and
the group number offset comprises a first group number offset and/or a second group number offset, the first group number offset is a group number offset of the RRC_IDLE terminal device, and the second group number offset is a group number offset of the RRC_INACTIVE terminal device.

56. The apparatus according to claim 54 or 55, wherein that the transceiver unit is configured to receive the first grouping parameter comprises:
receiving the first grouping parameter from a broadcast message; or
receiving the first grouping parameter from a radio resource control RRC message.

57. The apparatus according to any one of claims 54 to 56, wherein that the processing unit is configured to determine the group number of the terminal device based on the first grouping parameter comprises:
determining, by the RRC_IDLE terminal device, the group number based on the first group number range or the first group number offset; or
determining, by the RRC_INACTIVE terminal device, the group number based on the second group number range or the second group number offset.

58. A paging apparatus, comprising:
a transceiver unit, configured to send a first grouping parameter, wherein the first grouping parameter is used to determine a group number of a radio resource control idle RRC_IDLE terminal device and/or a group number of a radio resource control inactive RRC_INACTIVE terminal device, and the group number is used by a network device to send paging.

59. The apparatus according to claim 58, wherein the first grouping parameter comprises a group number range or a group number offset;
the group number range comprises a first group number range and a second group number range, the first group number range is a group number range of the RRC_IDLE terminal device, and the second group number range is a group number range of the RRC _INACTIVE terminal device; and
the group number offset comprises a first group number offset and a second group number offset, the first group number offset is a group number offset of the RRC_IDLE terminal device, and the second group number offset is a group number offset of the RRC_INACTIVE terminal device.

60. The apparatus according to claim 58 or 59, wherein that the transceiver unit is configured to send the first grouping parameter comprises:
broadcasting the first grouping parameter; or
sending the first grouping parameter by using a radio resource control RRC message.

61. A paging apparatus, comprising:
a transceiver unit, configured to send a second grouping parameter, wherein the second grouping parameter is used to determine a group number of a terminal device, wherein
the transceiver unit is configured to receive a fourth grouping parameter, wherein the fourth grouping parameter is used to determine the group number of the terminal device; and
a processing unit, configured to determine the group number of the terminal device based on the second grouping parameter and the fourth grouping parameter, wherein the group number is used by a network device to send paging.

62. The apparatus according to claim 61, wherein the second grouping parameter is determined based on a quality of service parameter of a service of the terminal device, and/or a service type of the terminal device, and/or a mobility state or a speed of the terminal device.

63. The apparatus according to claim 61 or 62, wherein that the transceiver unit is configured to receive the fourth grouping parameter comprises:
receiving the fourth grouping parameter from a broadcast message; or
receiving the fourth grouping parameter from a radio resource control RRC message.

64. The apparatus according to any one of claims 61 to 63, wherein the apparatus further comprises:
the transceiver unit is configured to receive an updated second grouping parameter, and the second grouping parameter is used to determine the group number of the terminal device.

65. A paging apparatus, comprising:
a transceiver unit, configured to receive a second grouping parameter, wherein the second grouping parameter is used to determine a group number of a terminal device; and
the transceiver unit is configured to send the second grouping parameter and a third grouping parameter to an access network device, wherein the third grouping parameter is used to determine a fourth grouping parameter.

66. The apparatus according to claim 65, wherein the second grouping parameter is determined based on a quality of service parameter of a service of the terminal device, and/or a service type of the terminal device, and/or a mobility state or a speed of the terminal device.

67. The apparatus according to claim 65 or 66, wherein the apparatus further comprises:
the transceiver unit is configured to send an updated second grouping parameter, and the second grouping parameter is used to determine the group number of the terminal device.

68. A paging apparatus, comprising:
a transceiver unit, configured to receive a second grouping parameter, wherein the second grouping parameter is used to determine a group number of a terminal device, wherein
the transceiver unit is configured to receive a third grouping parameter, and the third grouping parameter is used to determine a fourth grouping parameter; and
a processing unit, configured to determine the fourth grouping parameter based on the third grouping parameter, wherein
the transceiver unit is configured to send the fourth grouping parameter, and the fourth grouping parameter is used to determine the group number of the terminal device; and
the processing unit is configured to determine the group number of the terminal device based on the second grouping parameter and the fourth grouping parameter, and the group number is used by a network device to send paging.

69. The apparatus according to claim 68, wherein the second grouping parameter is determined based on a quality of service parameter of a service of the terminal device, and/or a service type of the terminal device, and/or a mobility state or a speed of the terminal device.

70. The apparatus according to claim 68 or 69, wherein that the transceiver unit is configured to send the fourth grouping parameter comprises:
broadcasting the fourth grouping parameter; or
sending the fourth grouping parameter by using a radio resource control RRC message.

71. A communication apparatus, comprising:
a processor, configured to execute a computer program stored in a memory, to enable the communication apparatus to perform the communication method according to any one of claims 1 to 35.

72. A computer-readable storage medium, wherein the computer-readable storage medium stores a computer program, and when the computer program is run, a computer is enabled to perform the method according to any one of claims 1 to 35.

73. A chip system, comprising a processor, configured to invoke a computer program from a memory and run the computer program, to enable a paging device, on which the chip system is mounted, to perform the method according to any one of claims 1 to 35.
